# EUROPÄISCHE PATENTANMELDUNG

(11) **EP 4 686 618 A1**
(43) Veröffentlichungstag der Anmeldung: **04.02.2026**
(21) Anmeldenummer: 24191786.3
(22) Anmeldetag: 30.07.2024
(51) Int. Cl.: B60S 3/06

(54) **FAHRZEUGBEHANDLUNGSANLAGE MIT STELLANTRIEBEN**

(71) Anmelder: WashTec Holding GmbH, 86153 Augsburg (DE)
(72) Erfinder: BRUDNIOK, Sven, 86853 Langerringen (DE)
(74) Vertreter: Meissner Bolte Partnerschaft mbB

(57) **Zusammenfassung**

Die vorliegende Erfindung betrifft eine Fahrzeugbehandlungsanlage 1 mit einem Laufwagen 3, der auf einer horizontalen Traverse 2 in Querrichtung bewegbar gelagert ist. Des Weiteren weist die Fahrzeugbehandlungsanlage 1 eine Aufhängung 4 auf, die an dem Laufwagen 3 gelagert ist. Außerdem enthält sie eine um eine Rotationsachse R drehbare, an der Aufhängung 4 befestigte Behandlungsbürste 5. Die Aufhängung 4 weist einen ersten Stellantrieb 7 zum Querschwenken der Behandlungsbürste 5 um eine horizontale Längsachse und einen zweiten Stellantrieb 7 zum Längsschwenken der Behandlungsbürste 5 um eine horizontale Querachse auf. Bei der erfindungsgemäßen Fahrzeugbehandlungsanlage 7 ist der erste Stellantrieb 7 mit dem Laufwagen 3 und mit einem Verbindungselement 9 der Aufhängung 4 gekoppelt. Der zweite Stellantrieb 8 ist mit dem Verbindungselement 9 und mit einem Bürstenbefestigungselement 10 gekoppelt. Dabei ist die Kopplung des ersten Stellantriebs 7 mit dem Verbindungselement 9 mit einem seitlichen Versatz V zu einer Ebene angeordnet, die von der Vertikalrichtung und der Querrichtung aufgespannt wird und in welcher der Schwerpunkt S der Behandlungsbürste 5 in Nullstellung liegt.

## Beschreibung

Die vorliegende Erfindung betrifft eine Fahrzeugbehandlungsanlage mit einem Laufwagen, der auf einer horizontalen Traverse in Querrichtung bewegbar gelagert ist. Des Weiteren weist die Fahrzeugbehandlungsanlage eine Aufhängung auf, die an dem Laufwagen gelagert ist. Außerdem enthält sie eine um eine Rotationsachse drehbare, an der Aufhängung befestigte Behandlungsbürste. Die Aufhängung weist einen ersten Stellantrieb zum Querschwenken der Behandlungsbürste um eine horizontale Längsachse und einen zweiten Stellantrieb zum Längsschwenken der Behandlungsbürste um eine horizontale Querachse auf.

Bei der Fahrzeugbehandlungsanlage handelt es sich insbesondere um eine Fahrzeugwaschanlage, zum Beispiel einer Portalwaschanlage oder eine Waschstraße. Entsprechend handelt es sich bei der Behandlungsbürste insbesondere um eine Waschbürste, zum Beispiel eine Seitenwaschbürste.

Beim Waschen von Fahrzeugen ist es erforderlich, dass nicht nur vertikale Seiten-, Front- oder Heckflächen gereinigt werden, sondern auch geneigte oder gekrümmte Seiten-, Front- oder Heckflächen. Um solche Flächen mittels einer Waschbürste, insbesondere einer Seitenwaschbürste, befriedigend zu reinigen, ist es vorteilhaft, wenn die Waschbürste so aufgehängt ist, dass sie nicht nur vertikal ausgerichtet ist, sondern so geschwenkt werden kann, dass sich die Ausrichtung der Rotationsachse der geneigten Seitenfläche anpassen kann. Hierfür wurde vorgeschlagen, eine hängende, drehbare Seitenwaschbürste frei pendelnd aufzuhängen. Beispielsweise beschreibt die DE 193 68 89 A1 eine Vorrichtung zum Waschen der Seitenfläche eines Fahrzeugs mit frei nach allen Seiten pendelnd am oberen Ende der Waschbürstenachse kardanisch aufgehängten Seitenwaschbürsten. Beim Zustellen der Waschbürste an das Fahrzeug kann die Seitenwaschbürste sich somit an die geneigten Seitenflächen des Fahrzeugs anpassen, indem die Rotationsachse aus der Vertikalen herausgeschwenkt wird. Nachteilig dabei ist, dass die Waschbürste mit ihrem Gewicht auf die Seitenfläche drückt, wodurch stärker geneigte Seitenflächen des Fahrzeugs unerwünscht stark belastet werden.

Um eine solche Belastung der geneigten Seitenflächen zu vermeiden, schlägt die WO 2016/030218 A1 eine Fahrzeugwaschanlage mit einer Seitenwaschbürste vor, die mittels einer Aufhängung um eine erste horizontale Schwenkachse und eine davon unterschiedliche zweite horizontale Schwenkachse drehbar an einer Traverse der Fahrzeugwaschanlage gelagert ist, wobei die Aufhängung einen ersten Stellantrieb zum Verschwenken der Seitenwaschbürste um die erste Schwenkachse und einen zweiten Stellantrieb zum Verschwenken der Seitenwaschbürste um die zweite Schwenkachse aufweist. Die Aufhängung weist dabei eine erste Lagerstütze auf, die um die eine der Schwenkachsen drehbar an einer zweiten Lagerstütze gelagert ist, welche wiederum um die andere Schwenkachse drehbar an der Traverse gelagert ist. Nachteilig an der Aufhängung dieser Fahrzeugwaschanlage ist, dass sie einen großen Bauraumbedarf in vertikaler Richtung aufweist, Insbesondere der vertikale Abstand der Ankopplung der Waschbürste von der Traverse ist relativ groß.

Der Erfindung liegt die Aufgabe zugrunde, eine Fahrzeugbehandlungsanlage der eingangs genannten Art bereitzustellen, bei welcher der Bauraumbedarf in vertikaler Richtung verringert ist.

Erfindungsgemäß wird diese Aufgabe durch eine Fahrzeugbehandlungsanlage mit den Merkmalen des Anspruchs 1 gelöst. Vorteilhafte Ausgestaltungen und Weiterbildungen ergeben sich aus den abhängigen Ansprüchen.

Bei der erfindungsgemäßen Fahrzeugbehandlungsanlage ist der erste Stellantrieb zum Querschwenken auf einer Seite mit dem Laufwagen gekoppelt und auf der anderen Seite mit einem Verbindungselement der Aufhängung gekoppelt. Der zweite Stellantrieb zum Längsschwenken ist auf einer Seite mit dem Verbindungselement gekoppelt und auf der anderen Seite mit einem Bürstenbefestigungselement, an dem die Behandlungsbürste befestigt ist, gekoppelt. Dabei ist die Kopplung des ersten Stellantriebs mit dem Verbindungselement der Aufhängung mit einem seitlichen Versatz zu einer Ebene angeordnet, die von der Vertikalrichtung und der Querrichtung aufgespannt wird und in welcher der Schwerpunkt der Behandlungsbürste in Nullstellung liegt.

Unter der Querrichtung wird in dieser Schrift die Bewegungsrichtung des Laufwagens auf der horizontalen Traverse verstanden. Entsprechend wird in dieser Schrift unter einer Längsrichtung eine horizontale Richtung verstanden, welche senkrecht zur Querrichtung ausgerichtet ist. Bezogen auf das mit der Fahrzeugbehandlungsanlage zu reinigende Fahrzeug ist die Längsrichtung parallel zur Längserstreckung des Fahrzeugs bzw. zur Bewegungsrichtung des Fahrzeugs bei einer Geradeausfahrt. Entsprechend ist die Querrichtung parallel zur seitlichen Erstreckung des zu reinigenden Fahrzeugs. Beim Querschwenken der Behandlungsbürste wird die Rotationsachse der Behandlungsbürste um eine horizontale Längsachse, das heißt, eine horizontale in Längsrichtung ausgerichtete Achse, geschwenkt. Durch eine solche Schwenkbewegung kann die Neigung der Behandlungsbürste an die Neigung einer Seitenfläche des Fahrzeugs angepasst werden. Beim Längsschwenken der Behandlungsbürste wird diese um eine horizontale Querachse, das heißt, um eine horizontal in Querrichtung ausgerichtete Achse, geschwenkt. Durch ein solches Längsschwenken kann die Ausrichtung der Rotationsachse der Behandlungsbürste beispielsweise an eine geneigte Heckfläche oder eine geneigte Frontfläche des Fahrzeugs angepasst werden.

Die Behandlungsbürste der erfindungsgemäßen Fahrzeugbehandlungsanlage kann mittels dem ersten und zweiten Stellantrieb aktiv geschwenkt werden, so dass sie sowohl in Querrichtung als auch in Längsrichtung eine definierte Neigung aufweist. Dabei sind die beiden Stellantriebe jedoch voneinander entkoppelt. Dies bedeutet, dass jeder Stellantrieb eine von dem andern Stellantrieb unabhängige Schwenkbewegung der Behandlungsbürste bewirkt. Die Entkopplung der Stellantriebe führt auch dazu, dass jeder Stellantrieb die Behandlungsbürste in einer Ebene schwenkt.

Unter einer Behandlungsbürste in Nullstellung wird in dieser Schrift verstanden, dass die Rotationsachse für Eigendrehung der Behandlungsbürste vertikal ausgerichtet ist. Unter einer unverschwenkten Behandlungsbürste wird in dieser Schrift verstanden, dass von den Stellantrieben keine Kräfte oder Drehmomente auf die Behandlungsbürste ausgeübt werden. In Abhängigkeit von der Lagerung der Behandlungsbürste ist die Rotationsachse der Behandlungsbürste dann vertikal oder gegebenenfalls etwas schräg zur Vertikalen ausgerichtet. Der unverschwenkte Zustand der Behandlungsbürste wird auch als Neutralstellung bezeichnet.

Bei der erfindungsgemäßen Fahrzeugbehandlungsanlage gibt es vorteilhafterweise vier Bewegungsachsen: Der Laufwagen wird mit der daran aufgehängten Behandlungsbürste (i) translatorisch auf einer Querachse bewegt, die Behandlungsbürste wird (ii) mittels der Aufhängung rotatorisch um die horizontale Längsachse und (iii) die horizontale Querachse geschwenkt und die Behandlungsbürste wird (iv) um die eigene Rotationsachse gedreht. Diese vier Bewegungsachsen sind seriell gekoppelt. Es wird eine sogenannte kinematische Kette hergestellt, und zwar von der horizontalen translatorischen Bewegung in Querrichtung zu der Schwenkbewegung um die Längsachse (Querschwenken) zu der Schwenkbewegung um die Querachse (Längsschwenken) und schließlich zu der Rotationsbewegung der Behandlungsbürste um die eigene Achse, das heißt, die Rotationsachse der Behandlungsbürste.

Schließlich kann die Behandlungsbürste noch translatorisch in Längsrichtung dadurch bewegt werden, dass das Portal, an welchem die Fahrzeugbehandlungsanlage montiert ist, in Längsrichtung relativ zum zu behandelnden Fahrzeug bewegt wird. Alternativ wird z. B. bei einer als Waschstraße ausgebildeten Fahrzeugbehandlungsanlage das Fahrzeug in Längsrichtung relativ zu der Behandlungsbürste bewegt.

Vorteilhafterweise ist dabei erfindungsgemäß die Reihenfolge der Bewegungsachsen so gewählt, dass ausgehend vom Laufwagen zunächst das Querschwenken um die Längsachse erfolgt und danach das Längsschwenken um die Querachse. Diese spezielle Wahl der Reihenfolge der Schwenkachsen für die Behandlungsbürsten hat verschiedene Vorteile:
Bei einer Waschanlage ist das Querschwenken eine Grundfunktion und das Längsschwenken eine Zusatzfunktion. Durch die erfindungsgemäße Wahl der Reihenfolge der Schwenkachsen der Behandlungsbürste ergibt sich ein modularer Aufbau, bei dem die Möglichkeit des Längsschwenkens auch weggelassen werden kann, ohne dass aufwändige Konstruktionsänderungen an der Aufhängung vorgenommen werden müssten.

Ein weiterer Vorteil dieser Wahl der Reihenfolge der Bewegungsachsen ist, dass der Bauraumbedarf der Waschanlage in vertikaler Richtung verringert ist. Der erste Stellantrieb zum Querschwenken greift an dem Verbindungselement so an, dass der Ansatzpunkt für die Kopplung außerhalb der sich in Querrichtung erstreckenden Vertikalebene, die durch die Rotationsachse bzw. den Schwenkpunkt der Behandlungsbürste in Nullstellung geht, liegt. Die Kopplungsstelle des ersten Stellzylinders an dem Verbindungselement liegt bezüglich dieser Ebene somit nicht über dem Schwerpunkt der Bürste. Er ist vielmehr in Längsrichtung versetzt. Hierdurch ist es möglich, dass der erste Stellantrieb seitlich neben dem Laufwagen angeordnet ist. Wäre die Kopplungsstelle in der Ebene des Schwerpunkts der Behandlungsbürste in Nullstellung angeordnet, könnte der Stellantrieb nicht seitlich neben dem Laufwagen angeordnet sein, da die Behandlungsbürste direkt unter dem Laufwagen hängt.

Vorteilhafterweise wird bei der erfindungsgemäßen Waschanlage somit in vertikaler Richtung weniger Bauraum für den ersten Stellantrieb benötigt. Gerade in dieser Richtung ist der Bauraum begrenzt, da der vertikale Abstand der Befestigung der Behandlungsbürste zum Laufwagen nicht zu groß sein sollte.

Die Längsachse und die Querachse zum Schwenken der Behandlungsbürste sind horizontal ausgerichtet und insbesondere senkrecht zueinander ausgerichtet. Die Rotationsachse der Behandlungsbürste ist jedoch versetzt zur Querachse zum Querschwenken angeordnet, so dass in der Neutralstellung der Stellantriebe die Rotationsachse der Behandlungsbürste geneigt ist. Die Neigung wird dabei insbesondere so gewählt, dass sie der Neigung einer üblichen Seitenfläche eines zu reinigenden Fahrzeugs entspricht. Das untere Ende der Behandlungsbürste ist in diesem Fall in Querrichtung in Bezug auf das zu reinigende Fahrzeug nach außen geschwenkt. In der Neutralstellung der Stellantriebe, das heißt, wenn die Stellantriebe keine Kraft und kein Drehmoment ausüben, hängt die Behandlungsbürste schräg geneigt.

Gemäß einer Ausgestaltung der erfindungsgemäßen Fahrzeugbehandlungsanlage ist die Aufhängung so ausgebildet, dass der Betrag des seitlichen Versatzes des ersten Stellantriebs in Längsrichtung beim Querschwenken und beim Längsschwenken unverändert bleibt. Hierdurch wird vorteilhafterweise erreicht, dass die Kopplung des ersten Stellantriebs beim Schwenken der Behandlungsbürste nicht mit dem Laufwagen kollidiert, auch wenn der erste Stellantrieb seitlich neben dem Laufwagen angeordnet ist.

Die Aufhängung der Behandlungsbürste bei der erfindungsgemäßen Waschanlage ist eine sogenannte kardanische Aufhängung. Bei einer solchen kardanischen Aufhängung sind Schwenkbewegungen der Behandlungsbürste um zueinander senkrechte horizontale Achsen möglich. Die beiden Schwenkachsen der Aufhängung schneiden sich dabei jedoch nicht notwendigerweise. Im Unterschied dazu schneiden sich diese Achsen bei einem Kardan- bzw. Kreuzgelenk. Bei der Aufhängung der erfindungsgemäßen Waschanlage ist insbesondere eine Schwenkachse oberhalb der anderen Schwenkachse angeordnet, so dass sich die Geraden der Schwenkachsen nicht schneiden.

Gemäß einer Ausgestaltung der erfindungsgemäßen Fahrzeugbehandlungsanlage ist die Kopplung des zweiten Stellantriebs mit dem Verbindungselement der Aufhängung in einer Ebene angeordnet, die von der Vertikalrichtung und der Längsrichtung aufgespannt wird und in welcher der Schwerpunkt der Behandlungsbürste in Nullstellung liegt. Im Unterschied zur Kopplung des ersten Stellantriebs mit dem Verbindungselement liegt somit der Schwerpunkt der Behandlungsbürste in Nullstellung in der Ebene, in welcher die Kopplungsstelle der Kopplung des zweiten Stellantriebs mit dem Verbindungselement liegt.

Die Wirkrichtung des ersten Stellantriebs bei einer Behandlungsbürste in Nullstellung kann horizontal, vertikal oder schräg ausgerichtet sein. Die Wirkrichtung wird dabei durch eine Richtung angegeben, welche durch die beiden Kopplungsstellen geht, durch welche der erste Stellantrieb mit dem Laufwagen einerseits und dem Verbindungselement andererseits gekoppelt ist. Wenn die Wirkrichtung des ersten Stellantriebs horizontal ausgerichtet ist, beispielsweise ein Zylinder des Stellantriebs horizontal ausgerichtet ist, ergibt sich vorteilhafterweise eine Bauraumersparnis in vertikaler Richtung.

Funktional ist insbesondere der rechtwinklige Abstand der Wirkrichtung des ersten Stellantriebes zur horizontalen Längsachse von Bedeutung. Hieraus ergeben sich vielfältige Ausgestaltungen, die sich in der Lage der Wirkrichtung des ersten Stellantriebes in einer Ebene parallel zur benachbarten Außenfläche des Laufwagens ergeben. Die Wirkrichtung kann in einer Abwägung aus Hauptkraftrichtung bezüglich der Behandlungskraft an der Behandlungsbürste auf das Fahrzeug, der Orientierung der Behandlungsbürste, dem Hebelarm und dem Bauraum der andere Anbauteile ausgerichtet werden. Dabei kann außerdem berücksichtigt werden, dass bei gleichem Druck die Zylinderkraft beim Strecken größer ist als beim Zusammenziehen.

Gemäß einer weiteren Ausgestaltung der erfindungsgemäßen Fahrzeugbehandlungsanlage ist der erste Stellantrieb bezüglich der Längsrichtung neben dem Laufwagen angeordnet. Vorteilhafterweise ist diese Anordnung möglich, da bei der erfindungsgemäßen Waschanlage die Reihenfolge der Bewegungsachsen so gewählt ist, dass zunächst ein Querschwenken ausgeführt wird und erst dann ein Längsschwenken. Daraus ergibt sich, dass bei einer vertikalen Ausrichtung des Verbindungselements dieses Verbindungselement beim Querschwenken in einer vertikalen Ebene neben dem Laufwagen bewegt wird, so dass das Verbindungselement beim Querschwenken nicht an den Laufwagen anstößt. Das Verbindungselement kann daher auf derselben Höhe wie der Laufwagen angeordnet sein. Beim Längsschwenken der Behandlungsbürste um die Querachse bleibt das Verbindungselement sowie der erste Stellantrieb statisch. Sie werden beim Längsschwenken nicht bewegt. Bei beiden Schwenkbewegungen kommt es somit zu keinem Anschlag des Verbindungselements und des Laufwagens, obwohl der erste Stellantrieb bezüglich der Längsrichtung neben dem Laufwagen angeordnet ist. Die Reihenfolge der Schwenkbewegungen führt dazu, dass der erste Stellantrieb nicht relativ zum Laufwagen in der vertikalen Längsebene (x-z-Ebene) gekippt wird. Der erste Stellantrieb und das Verbindungselement können beim Schwenken in dieser Ebene verbleiben. Hierdurch wird es ermöglicht, dass sowohl das Verbindungselement als auch der erste Stellantrieb seitlich dicht neben dem Laufwagen angeordnet werden können. Im Vergleich zu bekannten Aufhängungen können sie somit nach oben versetzt werden, wodurch Bauraum gewonnen wird, da es nicht notwendig ist, Bauraum in vertikaler Richtung für den ersten Stellantrieb bereitzustellen, da dessen Wirkrichtung bei einem Verkippen seine Ebene nicht verlässt.

Der erste Stellantrieb ändert seinen Abstand zum Laufwagen beim Quer- und Längsschwenken nicht. Er bewegt sich immer in einer Ebene parallel zum Laufwagen, sodass er sehr dicht an dem Laufwagen montiert werden kann. Der Abstand zwischen den Kopplungsstellen des ersten Stellantriebs kann sich zwar beim Betätigen des ersten Stellantriebs ändern, die Kopplungsstellen bleiben jedoch immer in derselben Ebene parallel zur Seitenfläche des Laufwagens.

Außerdem kann die Kopplungsstelle der Kopplung des ersten Stellantriebs mit dem Laufwagen oberhalb der Unterkante des Laufwagens angeordnet sein. Auch hierdurch ergibt sich eine Bauraumersparnis in vertikaler Richtung.

Der erste Stellantrieb wird insbesondere auf derselben Höhe wie der Laufwagen angeordnet. Ferner ist die Wirkrichtung des zweiten Stellantriebs insbesondere im Wesentlichen vertikal ausgerichtet.

Das Verbindungselement der kardanischen Aufhängung der Behandlungsbürste bei der erfindungsgemäßen Waschanlage bietet die Möglichkeit, beide Schwenkachsen räumlich so zueinander anzuordnen, dass sie einander nicht schneiden und zueinander einen Versatz aufweisen, wobei gleichzeitig der erste Stellantrieb seitlich neben der Aufhängung angebracht werden kann.

Gemäß einer weiteren Ausgestaltung der erfindungsgemäßen Fahrzeugbehandlungsanlage ist das Verbindungselement zumindest zum Teil seitlich neben dem Laufwagen angeordnet. Auch durch diese Ausgestaltung kann vorteilhafterweise der Bauraumbedarf in vertikaler Richtung verringert werden.

Gemäß einer weiteren Ausgestaltung ist die Kopplung des zweiten Stellantriebs mit dem Verbindungselement der Aufhängung oberhalb der unteren Kante der Traverse angeordnet.

Das Verbindungselement weist insbesondere eine vertikal ausgerichtete Verbindungsplatte auf, die zumindest zum Teil seitlich neben dem Laufwagen angeordnet ist. Diese Ausgestaltung ermöglicht es vorteilhafterweise, Bauraum zwischen dem Laufwagen und der Behandlungsbürste zu gewinnen. Vorteilhafterweise verringert sich somit der Bauraumbedarf in vertikaler Richtung. Trotzdem kann ein großer Schwenkbereich für den zweiten Stellantrieb zum Längsschwenken der Behandlungsbürste bereitgestellt werden.

Gemäß einer weiteren Ausgestaltung der erfindungsgemäßen Fahrzeugbehandlungsanlage ist die horizontale Längsachse am Laufwagen unterhalb der Traverse gelagert. In diesem Fall kann die Längsachse vorteilhafterweise in Längsrichtung auf beiden Seiten der Traverse im Laufwagen gelagert werden. Vorteilhafterweise kann durch diese Anordnung die Stabilität der Verbindung der Aufhängung zu dem Laufwagen verbessert werden.

Bei der erfindungsgemäßen Fahrzeugbehandlungsanlage weist der erste Stellantrieb insbesondere einen Stellzylinder auf. Alternativ oder zusätzlich weist insbesondere auch der zweite Stellantrieb einen Stellzylinder auf. Der Stellzylinder des ersten Stellantriebs wird auch als erster Stellzylinder bezeichnet. Gleichermaßen wird der Stellzylinder des zweiten Stellantriebs auch als zweiter Stellzylinder bezeichnet.

Die Stellantriebe können dabei vom selben Typ sein. Es kann sich jedoch auch um unterschiedliche Typen handeln. Beispielsweise ist der erste und/oder der zweite Stellzylinder pneumatisch verstellbar. Es ist somit möglich, dass beide Stellzylinder pneumatisch verstellbar sind oder nur ein Stellzylinder pneumatisch verstellbar ist und der andere Stellzylinder auf andere Weise, beispielsweise hydraulisch oder durch einen Elektromotor verstellbar ist.

Die erfindungsgemäße Fahrzeugbehandlungsanlage kann insbesondere dann vorteilhaft eingesetzt werden, wenn sie als Portalwaschanlage ausgestaltet ist, bei der gleichzeitig der Frontabschnitt oder der Heckabschnitt des Fahrzeugs zusammen mit den Felgen der Fahrzeugräder gereinigt werden. In diesem Fall ist es vorteilhaft, wenn die als Seitenwaschbürste ausgestaltete Behandlungsbürste relativ stark in Längsrichtung geschwenkt werden kann, damit sich das Portal während der Reinigung des Frontabschnitts oder des Heckabschnitts im Bereich der Felgen der Fahrzeugräder befinden kann, damit gleichzeitig mit dem Frontabschnitt oder dem Heckabschnitt des Fahrzeugs eine Felgenreinigung durchgeführt werden kann. Vorteilhafterweise ist die erfindungsgemäße Fahrzeugbehandlungsanlage hierfür geeignet, da die Aufhängung der Behandlungsbürste, zunächst um die Längsachse geschwenkt wird (Querschwenken) und danach erst um die Querachse (Längsschwenken). Weist beispielsweise das Verbindungselement der Aufhängung eine Verbindungsplatte auf, an der der Stellantrieb zum Querschwenken angreift, wird diese Verbindungsplatte in paralleler Ausrichtung zum Laufwagen geschwenkt. Wären die Stellantriebe umgekehrt angeordnet, das heißt, würde der erste Stellantrieb die Behandlungsbürste zunächst in Längsrichtung um die Querachse schwenken und danach der zweite Stellantrieb das Querschwenken um die Längsachse ausführen, ergäbe sich ein sehr viel geringerer Bauraum für eine Hubbewegung des zweiten Stellantriebs, insbesondere eines zweiten Stellzylinders.

Durch die erfindungsgemäße Ausgestaltung der Fahrzeugbehandlungsanlage kann vorteilhafterweise das Verbindungselement, insbesondere die Verbindungsplatte, an dem die Stellantriebe angreifen, nach oben neben den Laufwagen verlagert werden. Hierdurch wird in vertikaler Ausrichtung zwischen der Traverse und der Aufhängung weniger Bauraum benötigt. Vorteilhafterweise greifen die Stellzylinder nicht zu weit unten an der Aufhängung an, da dort die Behandlungsbürste angeordnet ist. Die Angriffspunkte der Stellzylinder können bei der erfindungsgemäßen Fahrzeugbehandlungsanlage nach oben verlagert werden, da der Angriffspunkt des zweiten Stellantriebs seitlich neben den Laufwagen verlagert wurde. Vorteilhafterweise ist die Hubbewegung des zweiten Stellzylinders zum Längsschwenken sehr groß.

Hierdurch ist es vorteilhafterweise möglich, dass bei der erfindungsgemäßen Fahrzeugbehandlungsanlage die Stellzylinder, insbesondere der zweite Stellzylinder, als Mehrstellungszylinder ausgebildet sind. Mehrstellungszylinder ermöglichen eine besonders flexible Einstellung der Behandlungsbürste. Sie kann an vielfältige geneigte Flächen eines Fahrzeugs angepasst werden. Der als Mehrstellungszylinder ausgebildete zweite Stellzylinder kann bevorzugt sehr große Schwenkwinkel in Längsrichtung umsetzen.

Bevorzugt ist der zweite Stellzylinder ein asymmetrischer Doppelzylinder mit zumindest vier aktiven Stellungen. Ein solcher asymmetrischer Doppelzylinder kann zum Beispiel zwei in Serie angeordnete Stellzylinder umfassen, wobei jeder der beiden Stellzylinder dieses Doppelzylinders aktiv in zwei Stellungen gebracht werden kann. Der Abstand der beiden Stellungen wird dabei als Hub dieses Doppelzylinders bezeichnet. Der Hub des einen Stellzylinders des Doppelzylinders unterscheidet sich dabei vom Hub des anderen Stellzylinders des Doppelzylinders. Auf diese Weise ergeben sich vier aktive Stellungen und eine passive Stellung. In der passiven Stellung erzeugen die Stellzylinder des Doppelzylinders keine Auslenkung der Behandlungsbürste. Bei einer pneumatischen Ausbildung des zweiten Stellungszylinders verfügt dieser bei der Ausgestaltung der Aufhängung der erfindungsgemäßen Fahrzeugbehandlungsanlage über einen ausreichend großen, insbesondere langen, Bauraum, um zwei Zylinder seriell zusammenzuschalten. Auf diese Weise kann die Behandlungsbürste über den zweiten Stellzylinder in verschiedene Positionen verfahren werden, die sich nach der individuellen Form des Fahrzeugs ausrichten. Zum Beispiel kann sich die Behandlungsbürste an spezifische Neigungswinkel des Frontabschnitts und/oder des Heckabschnitts des Fahrzeugs anpassen. Gleichermaßen kann es vorteilhafterweise möglich sein, den Frontabschnitt bzw. den Heckabschnitt des Fahrzeugs in unterschiedlichen relativen Positionen zum Portal einer als Portalwaschanlage ausgestalteten Fahrzeugbehandlungsanlage zu reinigen.

Außerdem können bei der erfindungsgemäßen Fahrzeugbehandlungsanlage die Stellzylinder modular aufgebaut sein, so dass zum Beispiel bei einer Ausgestaltung als asymmetrischer Doppelzylinder die einzelnen Stellzylinder dieses Doppelzylinders ausgetauscht werden können, um verschiedene aktive Schwenkstellungen durch den Doppelzylinder anfahren zu können.

Gemäß einer weiteren Ausgestaltung der erfindungsgemäßen Fahrzeugbehandlungsanlage weist die Aufhängung einen ersten Anschlag auf, welcher das Querschwenken des Verbindungselements um die Längsachse begrenzt. Alternativ oder zusätzlich kann die Aufhängung auch einen zweiten Anschlag aufweisen, welcher das Längsschwenken des Verbindungselements um die Querachse begrenzt. Der erste Anschlag weist insbesondere zumindest ein erstes Dämpferelement und ein erstes Befestigungselement zum Befestigen des ersten Dämpferelements an der Aufhängung auf
Gleichermaßen kann der zweite Anschlag zumindest ein zweites Dämpferelement und ein zweites Befestigungselement zum Befestigen des zweiten Dämpferelements an der Aufhängung aufweisen. Auch das zweite Befestigungselement weist insbesondere eine Sollbruchstelle auf.

Durch diese Ausgestaltung der Aufhängung können die Schwenkbewegungen der Behandlungsbürste auf definierte Weise begrenzt werden, um beispielsweise Beschädigungen am Fahrzeug oder an der Fahrzeugbehandlungsanlage durch zu große Schwenkbewegungen der Behandlungsbürste zu vermeiden.

Das erste Befestigungselement und/oder das zweite Befestigungselement weisen vorteilhafterweise eine Solbruchstelle auf. Vorteilhafterweise bricht bei dieser Ausgestaltung bei einer zu großen Beanspruchung, insbesondere bei zu großen Drehmomenten beim Längsschwenken um die Querachse oder beim Querschwenken um die Längsachse, der erste und/oder der zweite Anschlag bei der entsprechenden Sollbruchstelle. Vorteilhafterweise ist in diesem Fall nur das erste bzw. das zweite Befestigungselement zur Reparatur zu ersetzen.

Hierdurch werden die Reparaturkosten gesenkt. Ferner ist es vorteilhafterweise möglich, durch einen Austausch des ersten und/oder des zweiten Befestigungselements beliebige Endwinkel für den ersten und/oder zweiten Anschlag auf einfache Weise einzustellen.

Das erste und/oder das zweite Befestigungselement kann beispielsweise als U- oder C-Profil ausgebildet sein.

Das erste und/oder das zweite Befestigungselement ermöglichen es, dass beliebige maximale Schwenkwinkel der Behandlungsbürste auf einfache Weise eingestellt werden können. Um einen maximalen Schwenkwinkel in einer bestimmten Richtung zu verändern, muss nur das entsprechende Befestigungselement ausgetauscht werden, so dass es einen anderen Anschlag vorgibt.

Gemäß einer weiteren Ausgestaltung der erfindungsgemäßen Fahrzeugbehandlungsanlage weist der Laufwagen ein Gehäuse auf, welches zumindest zwei Bereiche aufweist. Es kann z. B. zweiteilig ausgeführt sein. Dabei ist der erste Bereich des Gehäuses planar und der zweite Bereich des Gehäuses gebogen. In diesem Fall ist der erste Stellantrieb mit dem zweiten Bereich des Verbindungselements gekoppelt. Zusätzlich kann auch der zweite Stellantrieb mit dem zweiten Bereich des Verbindungselements gekoppelt sein.

Die Konturen des ersten Bereichs können vorteilhafterweise sehr passgenau durch ein Laserschnittverfahren hergestellt werden, wohingegen die Konturgebung des gebogenen zweiten Bereichs durch den Biegevorgang zu Ungenauigkeiten führen kann. Vorteilhafterweise kann somit der erste Bereich für den Laufwagen und die Montage der an dem Laufwagen angeordneten Montageteile als Referenzebene dienen, an der Anbauteile exakt positioniert und korrekt ausgerichtet werden können.

Die Querachse kann insbesondere von einer Querwelle und die Längsachse von einer Längswelle gebildet sein.

Gemäß einer weiteren Ausgestaltung der erfindungsgemäßen Fahrzeugbehandlungsanlage ist das Verbindungselement gebogen. Die Querwelle und die Längswelle sind in diesem Fall in Aufnahmen des gebogenen Verbindungselements befestigt.

Gemäß einer weiteren Ausgestaltung der erfindungsgemäßen Fahrzeugbehandlungsanlage sind an der Längswelle ein erster Flansch und ein zweiter Flansch fest montiert. Der erste Flansch weist eine erste axiale Lagerfläche auf. Ferner weist auch der zweite Flansch eine zweite axiale Lagerfläche auf, wobei die axialen Lagerflächen zueinander ausgerichtet sind, insbesondere parallel ausgerichtet sind. Die Längswelle ist über den ersten Flansch in einer ersten Aufnahme des Verbindungselements und über den zweiten Flansch in einer zweiten Aufnahme des Verbindungselement befestigt, wobei bei der Befestigung der axiale Abstand der ersten axialen Lagerfläche von der axialen radialen Lagerfläche einstellbar ist.

Der Laufwagen weist bei dieser Ausgestaltung insbesondere einen Lagerblock mit einer Aufnahmeöffnung auf, in welcher die Längswelle angeordnet ist. Die Aufnahmeöffnung umfasst insbesondere eine erste Lageranordnung, welche Lagerblock-Lagerflächen aufweist, an denen über Lagerungen die Längswelle anliegt, so dass von der Längswelle eine Drehbewegung relativ zu dem Lagerblock ausführbar ist, und die Längswelle mittels des ersten und zweiten Flansches am Lagerblock axial positioniert ist. Der Lagerblock liegt insbesondere an der ersten axialen Lagerfläche und der zweiten axialen Lagerfläche über die Lagerungen für die axiale Positionierung an.

Die Welle der Längsachse wird somit insbesondere über zwei Flansche, die stirnseitig mit der Welle verschraubt sind, mit dem Verbindungselement der Aufhängung verbunden. Die Montageöffnungen im Verbindungselement sind dabei insbesondere ausreichend groß, um die Flansche trotz der sich durch die Biegung des Verbindungselements ergebenden Ungenauigkeiten aufnehmen zu können. Die Flansche können dadurch auf den Stirnseiten der Welle fixiert werden und die Längsachse kann über die Umfangsfläche der Welle zentriert werden. Die Flansche besitzen insbesondere einen Anschlag, über den sie von außen an dem Verbindungselement fixiert werden. Dies führt vorteilhafterweise dazu, dass die Lagerflächen zueinander ausgerichtet sind, auch wenn das Verbindungselement aufgrund der Biegung ungenau ist. Die Flansche verfügen insbesondere über Anlageflächen für die Lager. Der Abstand zwischen den Anlageflächen ist dabei für die Funktion der Lagerung wichtig.

Gemäß einer weiteren Ausgestaltung der erfindungsgemäßen Fahrzeugbehandlungsanlage kann dieser Abstand eingestellt werden, zum Beispiel über Beilagscheiben zwischen einem Flansch und einer Stirnseite der Welle und/oder über Beilagscheiben zwischen einem Flansch und dem Verbindungselement. Ferner wird bei dieser Ausgestaltung eine Lagerung der Längsachse im Laufwagen bereitgestellt. Im Laufwagen befindet sich ein Lagerblock für die Lagerung der Längsachse. Durch den Lagerblock geht zum Beispiel eine Bohrung für die Welle der Längsachse. Beispielsweise wird ein Gleitlager bereitgestellt. Durch den Lagerblock sind die Lager trotz der Biegeungenauigkeiten des Gehäuses des Laufwagens, der auch ein gebogenes Teil umfasst, zueinander genau axial ausgerichtet und beabstandet. Die Lagerflächen für die Lager und die Lagerflächen für die Welle der Längsachse werden nämlich von der Welle und dem Lagerblock vorgegeben und der Abstand der Anlageflächen zueinander kann zum Beispiel über die Beilagscheiben zwischen der Welle und einem Flansch eingestellt werden. Somit ist vorteilhafterweise über die Welle und den Lagerblock, bei denen es sich um Fräs- oder Drehteile handelt, die Lagerung funktional definiert, ohne dass die ungenau gebogenen Teile nachbearbeitet werden müssen. Auf diese Weise kann die Lagerung exakt und kostengünstig hergestellt werden.

Auch die planen Teile des Gehäuses des Laufwagens können kostengünstig und exakt, zum Beispiel durch Laserschneiden hergestellt werden.

Gemäß einer weiteren Ausgestaltung der erfindungsgemäßen Fahrzeugbehandlungsanlage ist die Querwelle an einer dritten und vierten Aufnahme des Verbindungselements befestigt. In diesem Fall weist die Querwelle insbesondere einen ersten Absatz mit einer dritten axialen Lagerfläche und einen zweiten Absatz mit einer vierten axialen Lagerfläche auf. Die Querwelle ist drehbar mit einem Bürstenbefestigungselement, mit welchem die Behandlungsbürste mit einer Lagerung gekoppelt ist, gekoppelt. Das Bürstenbefestigungselement weist in diesem Fall eine zweite Lageranordnung mit Lageraufnahmen auf, die an radialen Lagerflächen der Querwelle und der dritten axialen Lagerfläche und der vierten axialen Lagerfläche über Lagerungen anliegt, sodass von dem Bürstenbefestigungselement eine Drehbewegung relativ zur Querwelle ausführbar ist.

Die Querwelle kann dabei fest an der dritten und vierten Aufnahme des Verbindungselements befestigt sein.

Die Montageöffnungen, in denen die Querwelle für das Längsschwenken befestigt ist, befinden sich in dem Verbindungselement. Sie werden zum Beispiel über einen Biegevorgang zueinander ausgerichtet. Bei einem solchen Biegevorgang entstehen Ungenauigkeiten, die Ausrichtung ist ungenau. Die Montageöffnungen sind dabei insbesondere groß genug, damit die Querwelle trotz etwaiger Biegeungenauigkeiten eingeführt werden kann. Die Querwelle kann dann auf einer Innenseite der Montageöffnungen mit dem Verbindungsteil verschweißt werden.

Gemäß einer weiteren Ausgestaltung der erfindungsgemäßen Fahrzeugbehandlungsanlage weist der Laufwagen zumindest zwei untere horizontal beabstandete Lager und ein oberes Lager auf, das in horizontaler Richtung zwischen den beiden unteren Lagern angeordnet ist. Die obere Lagerung liegt in diesem Fall auf der Traverse auf und die unteren Lager liegen von unten an der Traverse an. Das erste untere Lager ist dabei so an dem Laufwagen montiert, dass es einen festen vertikalen Abstand von dem oberen Lager hat. Das zweite untere Lager ist hingegen so an dem Laufwagen bewegbar montiert, dass es mit einer Federkraft von unten gegen die Traverse gedrückt wird und der vertikale Abstand von dem oberen Lager veränderbar ist.

Vorteilhafterweise schlägt das erste untere Lager von unten an die Traverse so an, dass der Anschlag einem ersten Drehmoment um eine horizontale Längsachse entgegenwirkt. Ein solches Drehmoment tritt in einem Betriebszustand des Laufwagens auf, in dem die Behandlungsbürste bei der Reinigung in Querrichtung eine Kraft normal zur Fahrzeugoberfläche erfährt.

Das zweite untere Lager schlägt auch mit einem Anschlag von unten an die Traverse an, und zwar so, dass dieser Anschlag einem zweiten Drehmoment um die horizontale Längsachse entgegenwirkt, wobei das zweite Drehmoment entgegengesetzt zu dem ersten Drehmoment gerichtet ist.

Die auf das zweite untere Lager wirkende Federkraft ist in vertikaler Richtung insbesondere nach oben gerichtet und das zweite untere Lager ist insbesondere vertikal bewegbar an dem Laufwagen gelagert. Der Anschlag des zweiten unteren Lagers übt somit eine nach oben gerichtete Kraft auf die Unterseite der Traverse aus, die Größe der Kraft wird von der Federkraft bestimmt. Der Anschlag des zweiten unteren Lagers ist somit mit einer Kraft vorgespannt. Der Anschlag des zweiten unteren Lagers ist so gelagert, dass eine Bewegung in Richtung der ausgeübten Kraft ausführbar ist.

Die obere Lagerung kann bei der erfindungsgemäßen Fahrzeugbehandlungsanlage insbesondere das obere Lager und ein Antriebsrad aufweisen, welches mit einem Antrieb gekoppelt ist und welches in Reibeingriff mit der Oberseite der Traverse ist. Die zwischen dem Antriebsrad und der Oberseite der Traverse wirkende horizontale Reibungskraft hängt in diesem Fall von der Größe der Federkraft ab. Je größer die Federkraft ist, desto größer ist die maximale horizontale Reibungskraft. Mittels dieses Antriebs kann der Laufwagen auf der Traverse bewegt werden.

Die zweite untere Lagerung kann das zweite untere Lager und eine zweite Rolle aufweisen, die drehbar so an dem Laufwagen gelagert ist, dass die Drehachse der zweiten Rolle in vertikaler Richtung bewegbar ist, wobei die Federkraft auf die Drehachse der zweiten Rolle wirkt. Die Größe der Federkraft wird dabei insbesondere so gewählt, dass in einem Betriebszustand der rotierenden Behandlungsbürste, in dem von der Behandlungsbürste eine Betriebskraft in Querrichtung im Waschbetrieb aufgenommen wird, das erste Lager nicht in vertikaler Richtung den Kontakt zu Traverse verliert und die horizontale Reibungskraft, welche zwischen dem Antriebsrad des oberen Lagers und der Oberseite der Traverse wirkt, ausreichend groß ist, um den Laufwagen mittels des Antriebs in horizontaler Richtung auf der Traverse zu bewegen. Über die Federkraft kann vorteilhafterweise die Antriebskraft so eingestellt werden, dass ein Durchrutschen des Antriebsrades auf der Traverse vermieden wird. Auch wenn die rotierenden Behandlungsbürste mittels des ersten Stellantriebs in Querrichtung gehalten ist und die Behandlungsbürste eine tangentiale Waschkraft beim Reinigen der Front oder des Hecks des Fahrzeug erfährt, die in diesem Fall in Querrichtung wirkt, wird die Größe der Federkraft insbesondere so gewählt, dass das erste Lager nicht in vertikaler Richtung den Kontakt zu Traverse verliert und die horizontale Reibungskraft, welche zwischen dem Antriebsrad des oberen Lagers und der Oberseite der Traverse wirkt, ausreichend groß ist, um den Laufwagen mittels des Antriebs in horizontaler Richtung auf der Traverse zu bewegen. Vorteilhafterweise bleibt in diesem Fall die Ausrichtung des Laufwagens unverändert. Die Kraft, welche durch das vom Verschwenken der Behandlungsbürste ausgeübte Drehmoment auf den Laufwagen und damit auf das zweite untere Lager wirkt, ist somit kleiner als die entgegengesetzt wirkende Federkraft.

Die Drehachse der zweiten Rolle ist dabei insbesondere in einem Langloch gelagert, wobei sich das Langloch in einer Richtung erstreckt, in welcher die Federkraft auf die Drehachse der zweiten Rolle wirkt. Das Langloch erstreckt sich insbesondere in vertikaler Richtung.

Die Federkraft wird insbesondere von einer Feder ausgeübt, welche oberhalb der Traverse angeordnet ist. Das zweite untere Lager kann insbesondere eine Bügelanordnung aufweisen, welche die von der Feder ausgeübte Kraft auf die Drehachse der zweiten Rolle überträgt. Bevorzugt weist die Bügelanordnung zumindest zwei Schenkel auf, die von oberhalb der Traverse nach unterhalb der Traverse auf unterschiedlichen Seiten der Traverse vorbeigeführt sind.

Die Federkraft wird insbesondere von einer Spiralfeder oder einer Anordnung von Tellerfedern bereitgestellt, deren Achse jeweils vertikal ausgerichtet ist.

Gemäß einer Weiterbildung der erfindungsgemäßen Fahrzeugbehandlungsanlage ist der horizontale Abstand des oberen Lagers von dem zweiten unteren Lager, das bewegbar im Laufwagen gelagert ist, geringer als der horizontale Abstand des oberen Lagers von dem ersten unteren Lager, das fest im Laufwagen gelagert ist. Das obere Lager ist somit nicht mittig zwischen den beiden unteren Lagern angeordnet. Durch diese Anordnung des oberen Lagers ergibt sich vorteilhafterweise ein größerer Hebel zum starr angeordneten ersten unteren Lager. Die Gegenkräfte aufgrund der Hauptbetriebskräfte, insbesondere beim Querschwenken während der Reinigung, werden hierdurch vorteilhafterweise verringert.

Gemäß einer weiteren Ausgestaltung der erfindungsgemäßen Behandlungsanlage ist das zweite untere Lager auf einer Innenseite des Laufwagens gelagert, die in horizontaler Richtung näher am zu reinigenden Fahrzeug angeordnet ist als das erste untere Lager. Der an Federn aufgehängte Anschlag des zweiten unteren Lagers, das heißt insbesondere die zweite untere Rolle, ist somit zum Fahrzeug hin ausgerichtet. Dies hat zur Folge, dass die Hauptbetriebskräfte auf die Behandlungsbürste von dem oberen Lager und dem starr angebrachten ersten unteren Lager aufgenommen werden. Die Gegenkräfte werden daher starr auf die Traverse übertragen, da sich dazwischen keine Feder befindet.

Die in dieser Schrift verwendeten Begriffe "erste", "zweite" usw. sind so zu verstehen, dass hierdurch zwischen verschiedenen Elementen unterschieden wird. Die Anzahl dieser Elemente soll hierdurch nicht eingeschränkt werden. Diese Begriffe werden nur verwendet, um ein Element von einem anderen solchen Element zu unterscheiden. So könnte z. B. ein erster Stellantrieb, von der hier die Rede ist, als zweiter Stellantrieb bezeichnet werden, ohne dass dies von der Lehre der vorliegenden Erfindung abweicht. Wenn also in einer Ausführungsform ein zweites Element angegeben ist, kann ein erstes Element vorhanden sein oder nicht.

Die Erfindung wird nun anhand von Ausführungsbeispielen mit Bezug zu den Zeichnungen erläutert.
- Figur 1: zeigt ein Ausführungsbeispiel der erfindungsgemäßen Fahrzeugbehandlungsanlage, die in einer Portalwaschanlage angeordnet ist,
- die Figuren 2 bis 4: zeigen verschiedene Ansichten des Ausführungsbeispiels der erfindungsgemäßen Fahrzeugbehandlungsanlage,
- Figur 5: zeigt eine Ansicht des Laufwagens des Ausführungsbeispiels der erfindungsgemäßen Fahrzeugbehandlungsanlage, an dem modulare seitliche Lagerungen angebracht sind,
- Figur 6: zeigt eine Ansicht des Laufwagens des Ausführungsbeispiels der erfindungsgemäßen Fahrzeugbehandlungsanlage, an dem keine modularen seitlichen Lagerungen angebracht sind,
- Figur 7: zeigt eine Ansicht des Ausführungsbeispiels der erfindungsgemäßen Fahrzeugbehandlungsanlage von oben,
- Figur 8: zeigt einen Schnitt durch das Ausführungsbeispiels der erfindungsgemäßen Fahrzeugbehandlungsanlage,
- die Figuren 9, 10, 11A und 11B: zeigen verschiedene Ansichten des Gehäuses des Laufwagens des Ausführungsbeispiels der erfindungsgemäßen Fahrzeugbehandlungsanlage,
- die Figuren 12 und 13: veranschaulichen die Lagerung des Laufwagens auf der Traverse bei dem Ausführungsbeispiel der erfindungsgemäßen Fahrzeugbehandlungsanlage,
- die Figuren 14 bis 16: zeigen die Lagerung der zweiten unteren Rolle des Ausführungsbeispiels der erfindungsgemäßen Fahrzeugbehandlungsanlage,
- die Figuren 17 und 18: zeigen die Lagerung der ersten unteren Rolle des Ausführungsbeispiels der erfindungsgemäßen Fahrzeugbehandlungsanlage,
- Figur 19: zeigt eine erste Ausgestaltung der Befestigung der Seitenrolle des Ausführungsbeispiels der erfindungsgemäßen Fahrzeugbehandlungsanlage,
- die Figuren 20 bis 21: zeigen eine erste Variante einer zweiten Ausgestaltung der Befestigung der Seitenrolle des Ausführungsbeispiels der erfindungsgemäßen Fahrzeugbehandlungsanlage,
- die Figuren 22 bis 30A: zeigen eine zweite Variante der zweiten Ausgestaltung der Befestigung
- der: Seitenrolle des Ausführungsbeispiels der erfindungsgemäßen Fahrzeugbehandlungsanlage,
- die Figuren 30B bis 31: zeigen eine andere Ausbildung der ersten Ausgestaltung der Befestigung der Seitenrolle des Ausführungsbeispiels der erfindungsgemäßen Fahrzeugbehandlungsanlage,
- die Figuren 32 bis 35: zeigen das Verbindungselement des Ausführungsbeispiels der erfindungsgemäßen Fahrzeugbehandlungsanlage,
- die Figuren 36 und 37: zeigen die Lagerung der Längswelle des Ausführungsbeispiels der erfindungsgemäßen Fahrzeugbehandlungsanlage,
- die Figuren 38 und 39: zeigen die Lagerung der Querwelle des Ausführungsbeispiels der erfindungsgemäßen Fahrzeugbehandlungsanlage,
- die Figur 40 zeigt: verschiedene Stellungen eines Stellzylinders eines Stellantriebs des Ausführungsbeispiels der erfindungsgemäßen Fahrzeugbehandlungsanlage,
- die Figuren 41 bis 43: veranschaulichen Begrenzungen der Schwenkbewegungen der Waschbürste des Ausführungsbeispiels der erfindungsgemäßen Fahrzeugbehandlungsanlage und
- die Figuren 44 bis 53: zeigen verschiedene Schwenkstellungen der Waschbürste des Ausführungsbeispiels der erfindungsgemäßen Fahrzeugbehandlungsanlage.

Bei Richtungsangaben wird in dieser Schrift auf ein kartesisches Koordinatensystem Bezug genommen, bei dem die x-Achse in Längsrichtung eines Fahrzeugs zeigt, welches von der Fahrzeugbehandlungsanlage behandelt wird. Die y-Richtung ist die horizontale Querrichtung des Fahrzeugs und die z-Richtung ist die vertikale Richtung der Höhe des Fahrzeugs.

Die im folgenden beschriebenen Ausführungsbeispiele betreffen eine Fahrzeugbehandlungsanlage, die als Fahrzeugwaschanlage ausgebildet ist. Entsprechend handelt es sich bei der Behandlungsbürste um eine Waschbürste, insbesondere um eine Seitenwaschbürste.

Die Waschbürste 5 lässt sich auf der Traverse 2, d. h. in y-Richtung bewegen. Der Freiheitsgrad dieser Bewegungsrichtung wird mit D1 bezeichnet. Sofern Schwenkbewegungen einer Waschbürste 5 der Fahrzeugwaschanlage 1 beschrieben werden, wird unter einem Querschwenken ein Schwenken der Waschbürste 5 um eine horizontale Längsachse D2 verstanden. Die Längsachse D2 ist parallel zur x-Achse des Koordinatensystems ausgerichtet. Ferner wird unter einem Längsschwenken ein Schwenken der Waschbürste 5 um eine horizontale Querachse D3 verstanden. Die Querachse D3 ist parallel zur y-Achse des Koordinatensystems ausgerichtet. Des Weiteren ist eine Rotationsachse R definiert. Die Rotationsachse R ist die Achse der Waschbürste 5 selbst, um welche sie beim Reinigen des Fahrzeugs gedreht wird.

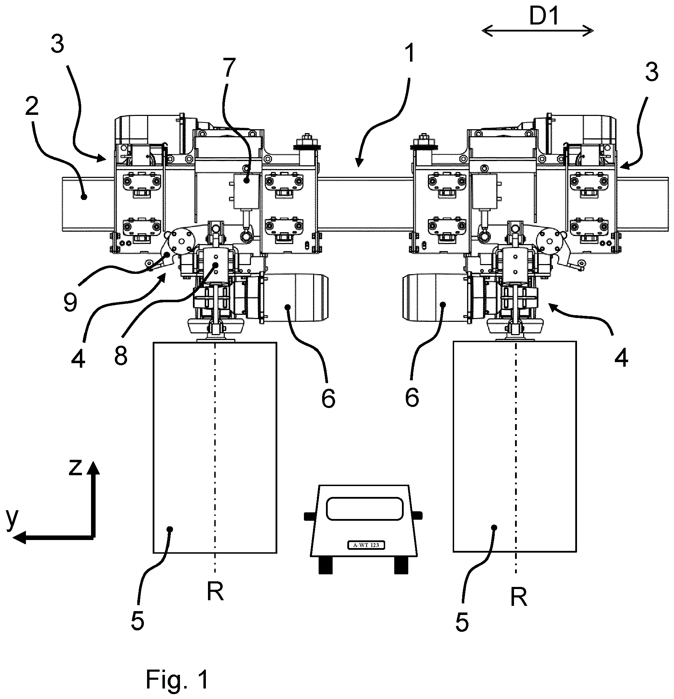

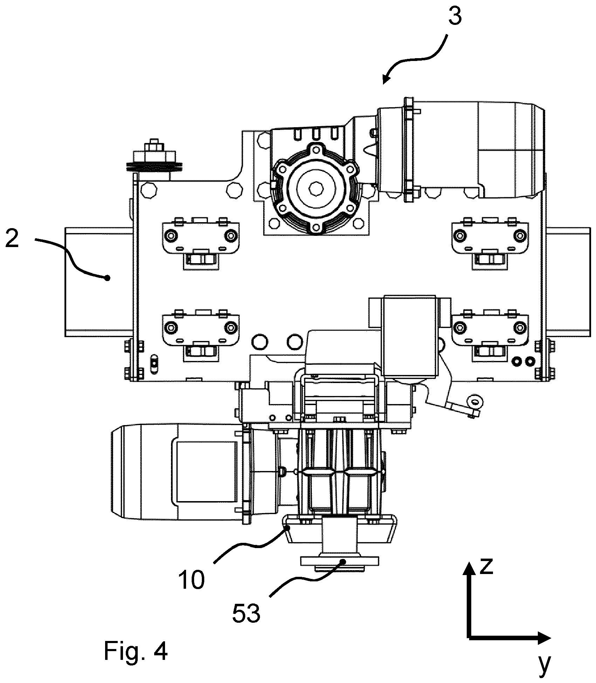

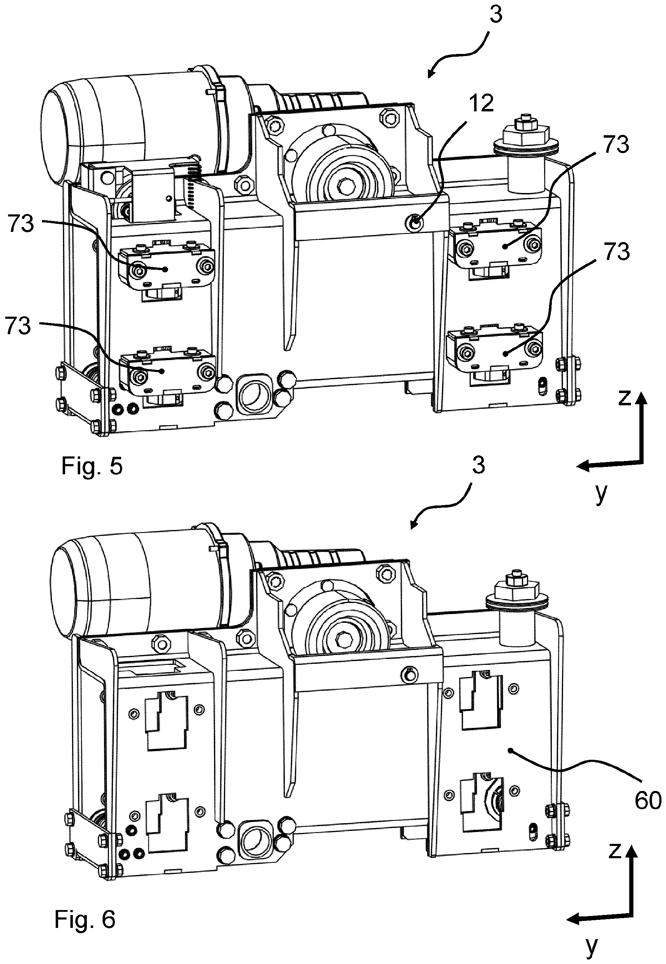

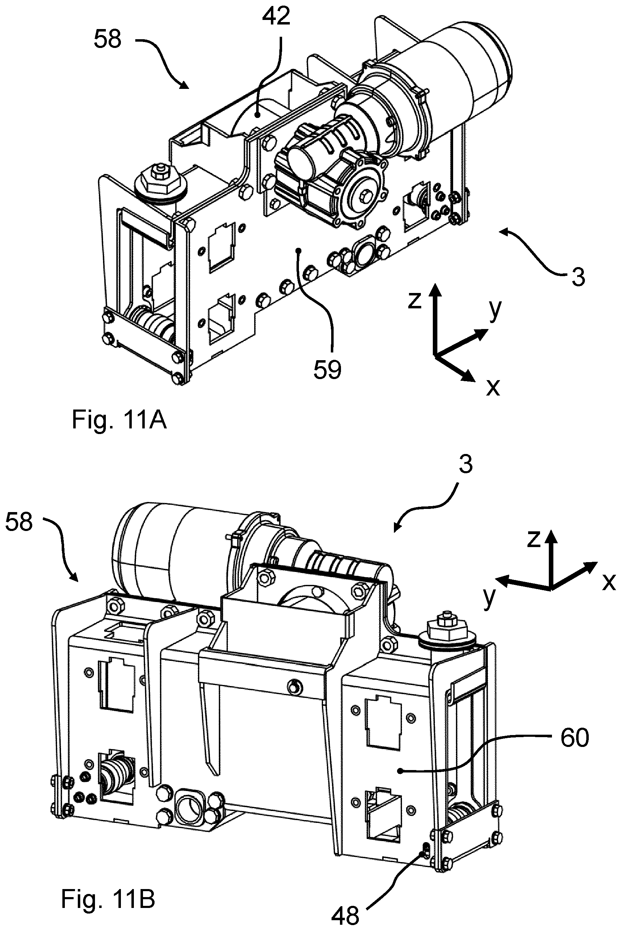

Im Folgenden wird ein erstes Ausführungsbeispiel der erfindungsgemäßen Fahrzeugwaschanlage 1 beschrieben:
Zunächst wird der grundsätzliche Aufbau der Fahrzeugwaschanlage 1 gemäß dem ersten Ausführungsbeispiel mit Bezug zu den Figuren 1 bis 11 erläutert:
Die Fahrzeugwaschanlage 1 ist als Portalwaschanlage ausgebildet, die in Längsrichtung des Fahrzeugs, das heißt in x-Richtung, entlang des zu reinigenden Fahrzeugs verfahrbar ist. Die Fahrzeugwaschanlage 1 weist eine Traverse 2 auf, die an zwei (nicht gezeigten) Säulen befestigt ist. Die Säulen sind wiederum auf Schienen gelagert, damit die Fahrzeugwaschanlage 1 in x-Richtung bewegt werden kann. Die Traverse 2 ist horizontal in Querrichtung, das heißt in y-Richtung, ausgerichtet und oberhalb des zu reinigenden Fahrzeugs angeordnet.

An der Traverse 2 sind zwei Laufwagen 3 gelagert, welche jeweils eine Halteeinrichtung bilden und welche in Querrichtung D1 auf der Traverse 2 verfahrbar sind. Die Laufwagen 3 weisen jeweils eine Aufhängung 4 auf, an welcher Waschbürsten 5 gelagert sind. Bei den Waschbürsten 5 handelt es sich um Seitenwaschbürsten, mit welchen sowohl die seitlichen Flächen des Fahrzeugs als auch die Vorderseite und die Rückseite des Fahrzeugs gereinigt werden können. Die Waschbürsten 5 sind mittels jeweils eines Motors und einer Motorgetriebeeinheit 6 um die Rotationsachse R drehbar.

Die Fahrzeugwaschanlage 1 umfasst zwei Anordnungen, welche jeweils den Laufwagen 3, die Aufhängung 4, die Waschbürste 5, den Motor und die Motorgetriebeeinheit 6 sowie weitere Elemente zum Schwenken der Waschbürste 5 umfassen. Die beiden Anordnungen sind spiegelbildlich zueinander aufgebaut, so dass sich das zu reinigende Fahrzeug in Querrichtung zwischen den Waschbürsten 5 der beiden Anordnungen befinden kann, wie es in Figur 1 gezeigt ist. Bei der Reinigung der Vorderseite und der Rückseite des Fahrzeugs können die Laufwägen 3 auch so verfahren werden, dass die Waschbürsten 5 die Vorderseite und die Rückseite des Fahrzeugs vollständig überdecken können.

Im Folgenden wird nur eine Anordnung mit einer als Laufwagen 3 ausgebildeten Halteeinrichtung, einer Aufhängung 4, einer Waschbürste 5, einem Motor und einer Motorgetriebeeinheit 6 sowie weiteren zugehörigen Elementen der Anordnung beschrieben. Die andere Anordnung ist entsprechend spiegelbildlich im Hinblick auf eine x-z-Ebene in der Mitte der Fahrzeugwaschanlage 1 aufgebaut.

An dem Laufwagen 3, der auf der horizontal ausgerichteten Traverse 2 in Querrichtung D1 bewegbar gelagert ist, ist die Aufhängung 4 gelagert. Die Aufhängung 4 umfasst einen ersten Stellantrieb 7 zum Querschwenken der Waschbürste 5 um die horizontale Längsachse D2 und einen zweiten Stellantrieb 8 zum Längsschwenken der Waschbürste 5 um eine horizontale Querachse D3.

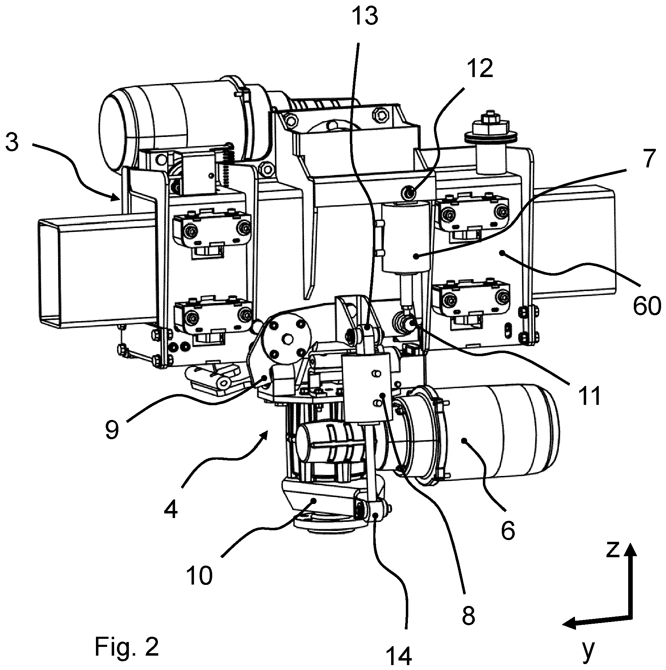

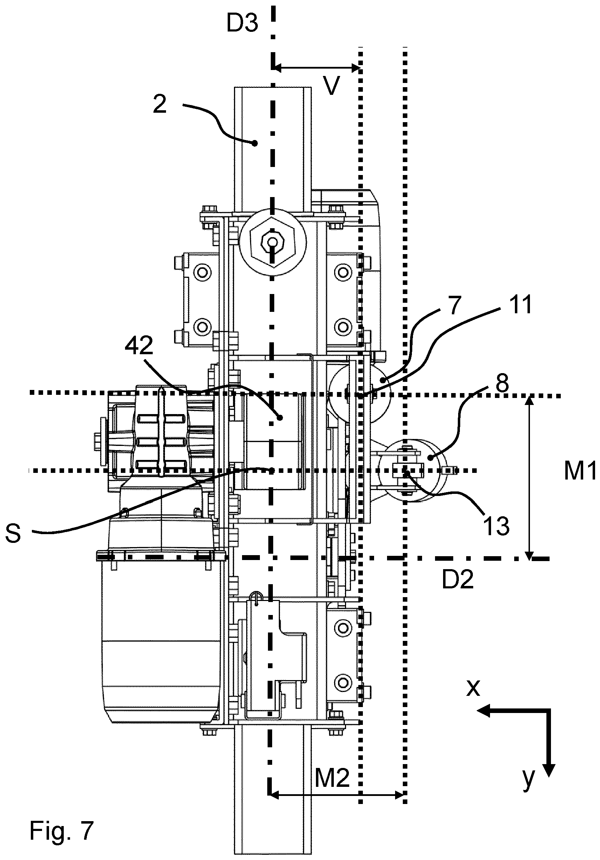

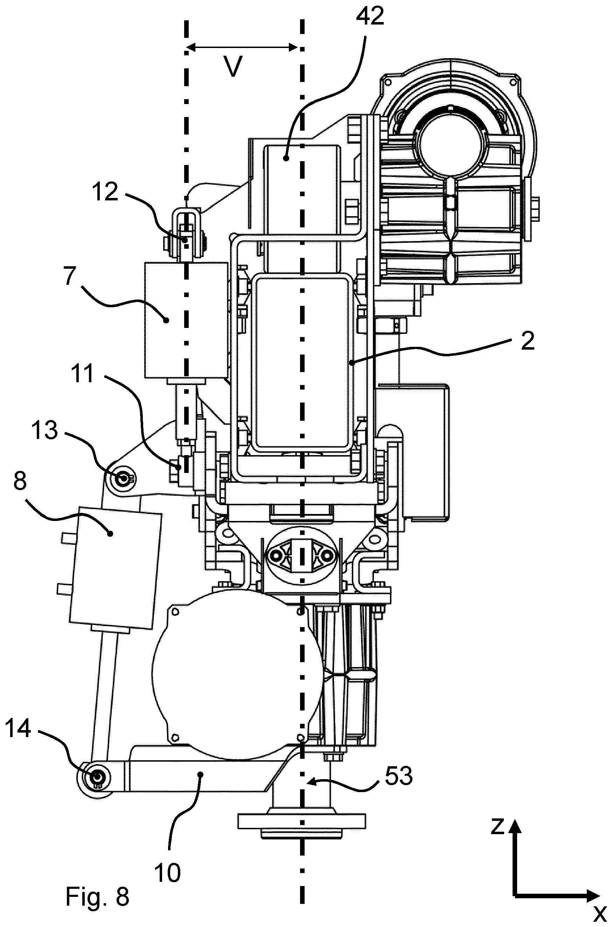

Der erste Stellantrieb 7 ist auf einer Seite mit dem Laufwagen 3 gekoppelt und auf der anderen Seite mit einem Verbindungselement 9 der Aufhängung 4 gekoppelt. Wie beispielsweise in Figur 2 gezeigt, ist der erste Stellantrieb 7 vertikal ausgerichtet und bezüglich der Längsrichtung neben dem Laufwagen 3 angeordnet, d. h. er ist in x-Richtung hinter dem Laufwagen 3 angeordnet. Dabei ist die Kopplung des ersten Stellantriebs 7 mit dem Verbindungselement 9 mit einem seitlichen Versatz zu der y-z-Ebene angeordnet. Diese y-z-Ebene wird von der Vertikalrichtung und der Querrichtung aufgespannt, wobei der Schwerpunkt der Waschbürste 5 in Nullstellung in dieser y-z-Ebene liegt. Dieser Versatz V ist insbesondere in den Figuren 7 und 8 gezeigt.

Der zweite Stellantrieb 8 ist auf einer Seite mit dem Verbindungselement 9 gekoppelt und auf der anderen Seite mit einem Bürstenbefestigungselement 10. An diesem Bürstenbefestigungselement 10 ist wiederum die Waschbürste 5 befestigt.

Die Wellen der Achsen D2 und D3 werden von den beiden Stellantrieben 7 und 8 angetrieben und bilden somit eine serielle kinematische Kette, durch welche die Waschbürste 5 ausgehend von dem Laufwagen 3 zunächst um die Längsachse D2 geschwenkt werden kann und danach um die Querachse D3. Beide Bewegungen sind unabhängig voneinander.

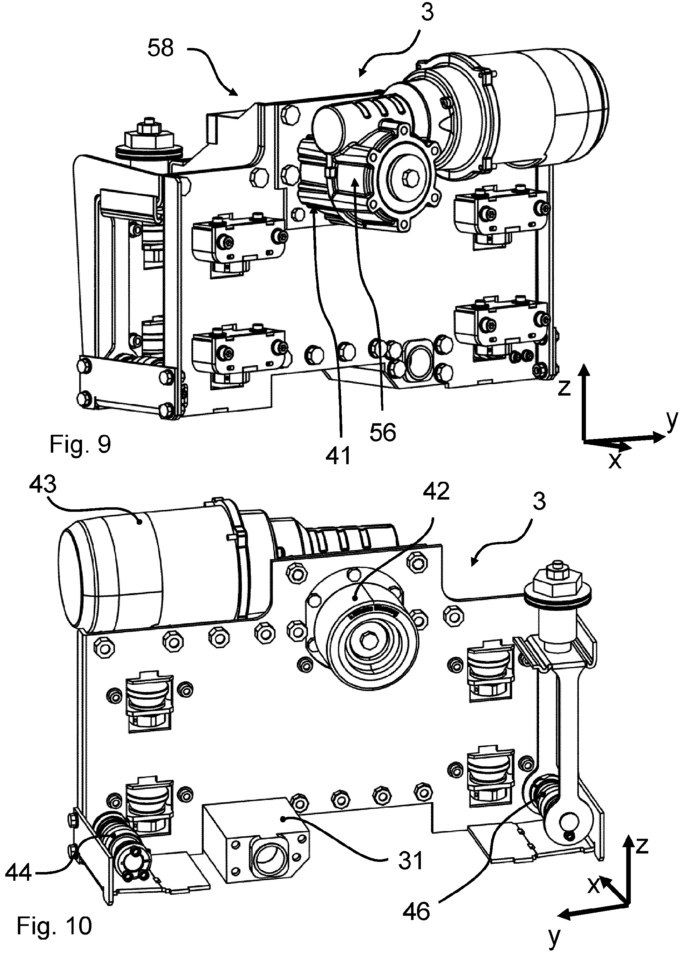

Im Folgenden werden Details der Fahrzeugwaschanlage 1 beschrieben:
Die Ausgestaltung des Laufwagens 3 wird mit Bezug zu den Figuren 9 bis 11B beschrieben:
Der Laufwagen 3 umfasst ein Gehäuse 58, welches zumindest zwei Bereiche aufweist. Beispielsweise kann das Gehäuse 58 des Laufwagens 3 zweigeteilt sein. Der erste Bereich 59 des Gehäuses 58 ist planar, wohingegen der zweite Bereich 60 des Gehäuses 58 gebogen ist oder sich über eine Biegung an den ersten planaren Bereich 59 anschließt. Bei dem beschriebenen Ausführungsbeispiel ist der erste Bereich 59 von einem ebenen Blech gebildet, wohingegen der zweite Bereich 60 von einem Blech gebildet ist, das mehrfach gebogen ist, um insgesamt eine kubische Form des Gehäuses 58 des Laufwagens 3 zu realisieren. Dabei sind die Konturen des ersten Bereichs 59 sehr passgenau durch ein Laserschnittverfahren hergestellt worden. Die Konturgebung des gebogenen zweiten Bereichs 60 führt durch den Biegevorgang zu Ungenauigkeiten. Der erste Bereich 59 dient bei dem Laufwagen 3 und der Montage der an dem Laufwagen 3 angeordneten Montageteile als Referenzebene, an der Anbauteile exakt positioniert und korrekt ausgerichtet werden können. Der gebogene Bereich 60 wird in der Montage an den Anbauteilen ausgerichtet und verfügt über maßtolerante Befestigungspunkte, um eine verspannungsfreie Fixierung der Anbauteile zu ermöglichen. Bei dem Ausführungsbeispiel ist der erste Stellantrieb 7 mit dem zweiten Bereich 60 des Gehäuses 58 bei der Kopplungsstelle 12 gekoppelt; siehe Fig. 2.

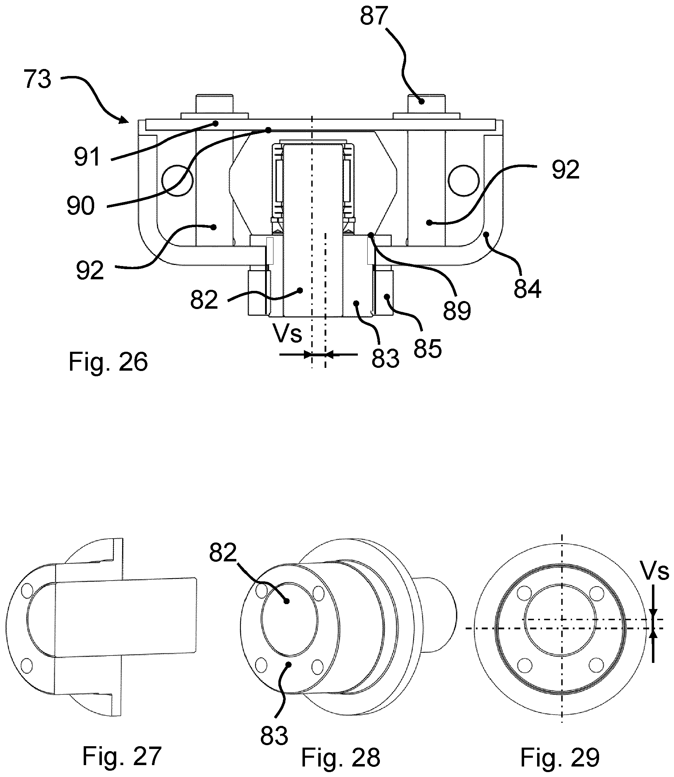

Im Folgenden wird die Lagerung des Laufwagens 3 auf der Traverse 2 mit Bezug zu den Figuren 9 bis 31 erläutert:

Der Laufwagen 3 weist zwei untere horizontal beabstandete Lager 44, 46 und ein oberes Lager 41 auf. Das obere Lager 41 ist in horizontaler Richtung zwischen den beiden unteren Lagern 44 und 46 angeordnet. Das obere Lager 41 lagert ein Antriebsrad 42, das auf der Traverse 2 aufliegt, und die unteren Lager 44, 46 lagern erste und zweite Rollen 45, 47, die von unten an der Traverse 2 anliegen. Das erste untere Lager 44 ist so an dem Laufwagen 3 montiert, dass es einen festen vertikalen Abstand von dem oberen Lager 41 hat. Das zweite untere Lager 46 ist hingegen so an dem Laufwagen 3 montiert, dass es mit einer Federkraft die gelagerte zweite Rolle 47 von unten gegen die Traverse 2 drückt wird und der vertikale Abstand zu dem oberen Lager 41 veränderbar ist.

Bei weiteren Ausführungsbeispielen kann die zweite Rolle 47 auch fest gelagert sein, sodass sich der Abstand zu dem oberen Lager 41 nicht verändern kann.

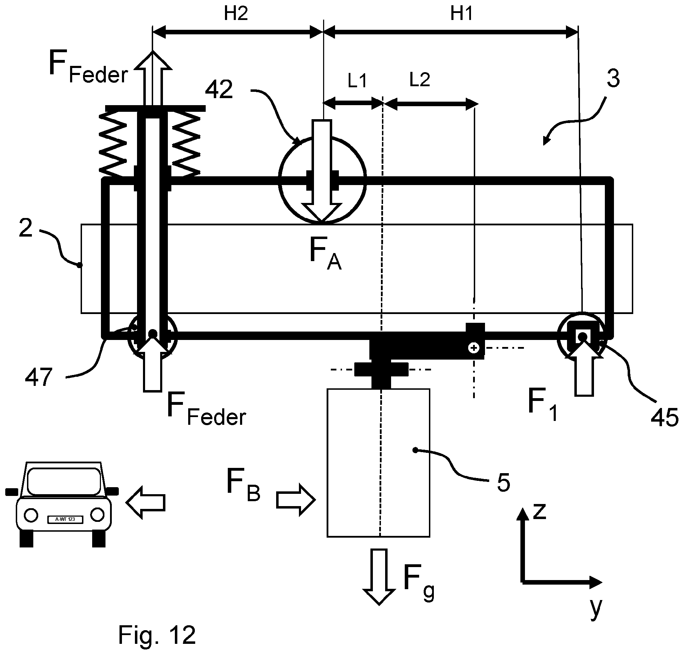

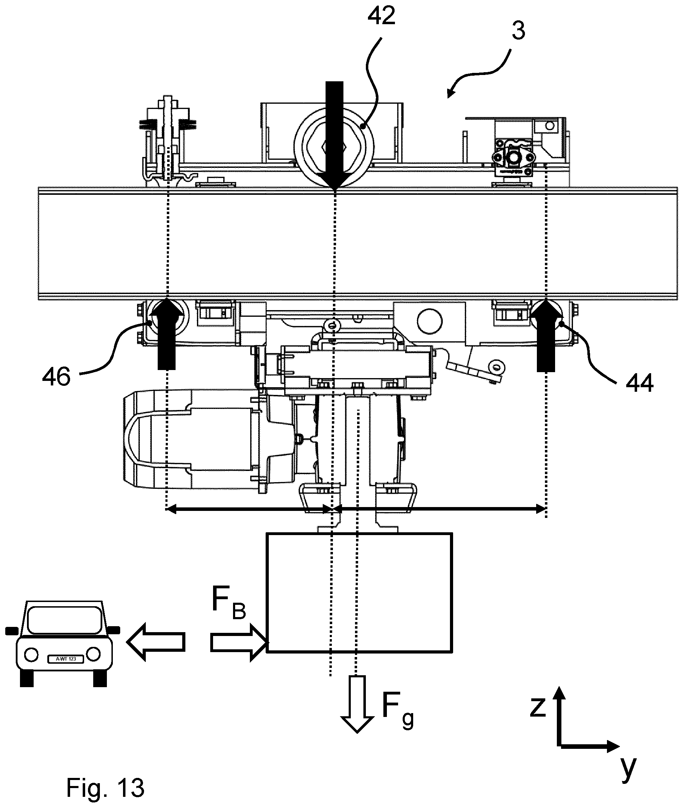

In den Figuren 12 und 13 ist gezeigt, wie das erste untere Lager 44 die erste Rolle 45 drehbar an dem Laufwagen 3 lagert und das zweite untere Lager 46 die zweite Rolle 47 drehbar so an dem Laufwagen 3 lagert, dass die Drehachse der zweiten Rolle 47 in vertikaler Richtung bewegbar ist, wobei die Federkraft auf die Drehachse der zweiten Rolle 47 wirkt.

Das Antriebsrad 42 des oberen Lagers ist mit einem Antrieb 43 gekoppelt; siehe Fig. 10. Das Antriebsrad 42 befindet sich in Reibeingriff mit der Oberseite der Traverse 2. Auf diese Weise wird bei einer Drehung des Antriebsrads 42 mittels des Antriebs 43 der Laufwagen 3 in Querrichtung D1 auf der Traverse 2 bewegt. Dabei hängt die zwischen dem Antriebsrad 42 und der Oberseite der Traverse 2 wirkende horizontale Reibungskraft unter anderem von der Größe der Federkraft ab, welche auf die zweite Rolle 47 wirkt. Je größer diese Federkraft ist, desto größer ist die maximale horizontale Reibungskraft.

Die erste Rolle 45 liegt von unten so an der Traverse 2 an, dass der Anschlag der ersten Rolle 45 an der Traverse 2 einem ersten Drehmoment um eine horizontale Längsachse entgegenwirkt. Dieses Drehmoment tritt in einem Betriebszustand des Laufwagens 3 auf, in dem die Waschbürste 5 bei der Reinigung des Fahrzeugs in Querrichtung aus einer Neutralstellung herausgeschwenkt ist. In diesem Fall wirkt die Betriebskraft F_{B} auf die Waschbürste 5, wie es in Figur 12 gezeigt ist. Die zweite Rolle 47 schlägt von unten gegen die Traverse 2 so an, dass dieser Anschlag einem zweiten Drehmoment um eine horizontale Längsachse entgegenwirkt, wobei das zweite Drehmoment entgegengesetzt zu dem ersten Drehmoment gerichtet ist.

Die Lagerung des Laufwagens 3 gegen eine Verdrehung um die x-Achse erfolgt somit über drei Rollen, wobei die obere Rollte von dem Antriebsrad 42 gebildet ist, und von den beiden unteren Rollen die erste Rolle 45 starr zum Laufwagen 3 montiert ist und die zweite Rolle 47 vertikal zum Laufwagen 3 bewegt werden kann, wobei sie mit einer Federkraft gegen die Unterseite der Traverse 2 gedrückt wird. Das Antriebsrad 42 stellt somit einen Teil der Lagerung des Laufwagens 3 dar. Durch diese Integration von Funktionen werden weniger Bauteile und weniger Bauraum benötigt.

Durch die Federkraft, mit welcher die zweite Rolle 47 gegen die Traverse 2 gedrückt wird, wird die Normalkraft zwischen dem Antriebsrad 42 und der Traverse 2 erhöht. Da die Kraftübertragung durch Reibschluss erfolgt, können auf diese Weise größere Antriebskräfte über diese Reibverbindung übertragen werden, um den Laufwagen 3 auf der Traverse 2 zu bewegen.

Der Laufwagen 3 ist so zur Fahrzeugwaschanlage 1, das heißt zum zu reinigenden Fahrzeug, ausgerichtet, dass die zweite Rolle 47, das heißt die untere gefederte Rolle, zu der Fahrzeuglängsseite hin ausgerichtet ist, die von der zugehörigen Waschbürste 5 gereinigt wird, wenn sich die Waschbürste 5 seitlich neben dem Fahrzeug befindet. Da zwei Waschbürsten 5 in einem Portal vorgesehen sind, sind diese Waschbürsten 5 in ihrer Anbringung zueinander bezüglich der x-z-Ebene gespiegelt. Dadurch, dass die federnd aufgehängte zweite Rolle 47 zum Fahrzeug hin ausgerichtet ist, werden die Hauptbetriebskräfte F_{B} beim Waschvorgang auf die Waschbürste 5 von dem Antriebsrad 42 und der starr angebrachten ersten Rolle 45 aufgenommen. Die Gegenkräfte werden starr auf die Traverse 2 übertragen, da sich dazwischen keine Feder befindet.

Im Hinblick auf die horizontale Anordnung in Querrichtung ist der horizontale Abstand H2 des Antriebsrads 42 von der zweiten Rolle 47 geringer als der horizontale Abstand H1 des Antriebsrads 42 von der ersten Rolle 45, welche fest im Laufwagen 3 gelagert ist. Das Antriebsrad 42 ist somit nicht mittig zwischen den beiden unteren Rollen 45, 47 angeordnet Hierdurch ergibt sich ein größerer Hebel von dem Antriebsrad 42 zu der starr angeordneten ersten Rolle 45. Folglich werden die Gegenkräfte aufgrund der Betriebskraft Fe, die beim Reinigen der Fahrzeugseite durch die Waschbürste 5 auftritt, kleiner.

Das Antriebsrad 42 ist ferner bezüglich der Rotationsachse R um den Abstand L1 in Richtung der der zweiten Rolle 47 versetzt angeordnet. Der Hebel zum Schwenken der Waschbürste 5 ist bezüglich der Rotationsachse R um den Abstand L2 in Richtung der der ersten Rolle 45 versetzt angeordnet.

Bei anderen Ausführungsbeispielen können die Abstände H1 und H2 verändert werden oder variabel ausgebildet sein, um die Abstände an die Kräfte, die auf dem Laufwagen 3 wirken, anzupassen. Bei einem weiteren Ausführungsbeispiel, bei dem die Rolle 47 nicht federnd gelagert ist, ist das Antriebsrad 42 in horizontaler Richtung in der Mitte zwischen den beiden Rollen 45 und 47 angeordnet.

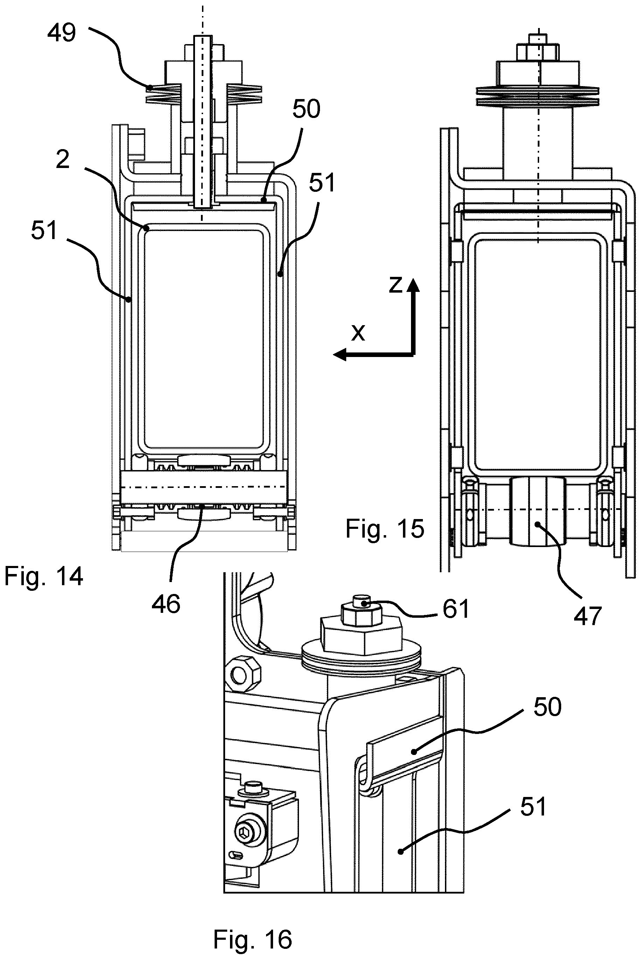

Mit Bezug zu den Figuren 14 bis 16 wird die veränderbare Lagerung der zweiten Rolle 47 erläutert:
Das zweite untere Lager 46 weist eine Bügelanordnung 50 auf, welche die von einer Feder 49 ausgeübte Kraft auf die Drehachse der zweiten Rolle 47 überträgt. Die Feder 49 ist dabei oberhalb der Traverse 2 angeordnet, wohingegen die zweite Rolle 47 unterhalb der Traverse 2 angeordnet ist und von der von der Feder 49 ausgeübten Federkraft von unten gegen die Traverse 2 gedrückt wird. Die Feder 49 ist eine Spiralfeder oder eine Anordnung von Tellerfedern.

Die Drehachse der zweiten Rolle 47 ist in einem Langloch 48 gelagert, wobei sich das Langloch 48 in der Richtung erstreckt, in welcher die Federkraft auf die Drehachse der zweiten Rolle 47 wirkt. Das Langloch 48 erstreckt sich somit in vertikaler Richtung.

Die Bügelanordnung 50 weist zwei Schenkel 51 auf, die von oberhalb der Traverse 2 nach unterhalb der Traverse 2 auf unterschiedlichen Seiten der Traverse 2 vorbeigeführt wird.

Über eine Einstellschraube 61 kann die von der Feder 49 ausgeübte Federkraft eingestellt werden. Die Größe der Federkraft wird dabei so gewählt, dass in einem Betriebszustand der rotierenden Waschbürste 5, die erste Rolle 45 nicht in vertikaler Richtung bewegt wird und daher nicht den Kontakt zur Traverse 2 verliert und die horizontale Reibungskraft, welche zwischen dem Antriebsrad 42 und der Oberseite der Traverse 2 wirkt, ausreichend groß ist, um den Laufwagen 3 mittels des Antriebs 43 in horizontaler Richtung auf der Traverse 2 zu bewegen. Die Ausrichtung des Laufwagens 3 bleibt im Betrieb somit unverändert, da das auf den Laufwagen 3 wirkende Drehmoment, das sich aus der Betriebskraft F_{B} ergibt, durch das entgegengesetzt Drehmoment, das sich aus der Federkraft ergibt, ausgeglichen wird.

Das Antriebsrad 42 ist so gelagert, dass es die Schwerkraft aufnimmt und gleichzeitig den Laufwagen 3 antreiben kann.

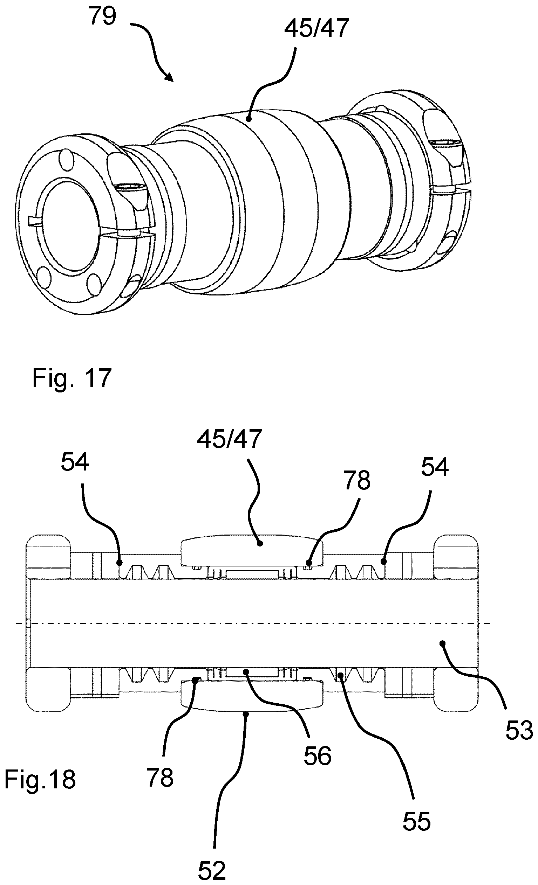

Die Lagerung der ersten und zweiten Rolle 45, 47 wird im Folgenden mit Bezug zu den Figuren 17 und 18 erläutert:
Die erste und die zweite Rolle 45, 47 sind in gleicher Weise gelagert, sodass im Folgenden nur die Lagerung der ersten Rolle 45 beschrieben wird. Im Unterschied zu der Lagerung der ersten Rolle 45 ist bei der zweiten Rolle 47 jedoch die Rollenwelle 53 der zweiten Rolle 47 so gelagert, dass sie sich in vertikaler Richtung bewegen kann.

Die erste Rolle 45 ist über eine Kombination 79 aus einem Nadellager 56 und einem Gleitlager 54 gelagert, wobei Axialkräfte von dem Gleitlager 54 und Radialkräfte von dem Nadellager 56 aufgenommen werden. Das Gleitlager 54 umfasst ein Reservoir 55, welches über O-Ringe 78 abgedichtet ist. Das Reservoir 55 nimmt Schmiermittel auf.

Die Lagerung der ersten Rolle 45 mit einem Nadellager 56 ermöglicht nur eine radiale Lagerung der ersten Rolle 45. Eine ungenaue Ausrichtung der Lagerung der ersten Rolle 45 bezüglich der Traverse 2 führt daher zu Axialkräften, die separat aufzunehmen sind. Diese werden von dem Gleitlager 54 aufgenommen.

Des Weiteren besitzt die Oberfläche der Rollenwelle 53 für die drehbare Lagerung der ersten Rolle 45 durchgängig denselben Radius. Die Rollenwelle 53 weist somit keine Absätze oder Vorsprünge auf.

Der Laufwagen 3 weist ferner an jedem Bereich 59, 60 des Gehäuses 58 des Laufwagens 58 zumindest zwei, im beschriebenen Ausführungsbeispiel vier, seitliche Lagerungen 73 und 102 auf, die bezüglich der Querrichtung auf der einen und der anderen Seite der Traverse 2 angeordnet sind. Die seitlichen Lagerungen 73, 102 sind dabei in Längsrichtung voneinander beabstandet. In Längsrichtung befindet sich zwischen den seitlichen Lagerungen 73, 102 die Traverse 2.

Die erste Ausgestaltung der seitlichen Lagerung 102 fixiert die Seitenrolle 95 in einem unveränderlichen Längsabstand zur Traverse 2. Die zweite Ausgestaltung der seitlichen Lagerungen 73 fixiert die Seitenrolle 95 in einem Längsabstand zur Traverse 2 derart, dass der Längsabstand durch einen Mechanismus einstellbar ist.

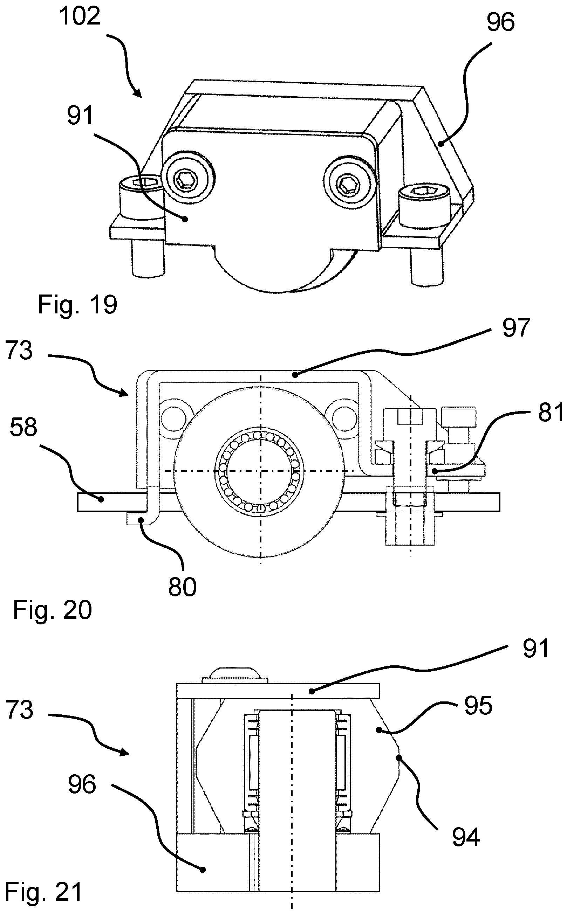

Die seitlichen Lagerungen 73, 102 werden im Folgenden mit Bezug zu den Figuren 19 bis 31 erläutert:
Die seitliche Lagerung 73, 102 weist eine Seitenrolle 95 mit einer Lauffläche 94 auf, die über eine Seitenrollenwelle 82 am Laufwagen 3 gelagert ist. Die Axiallagerung der Seitenrolle 95 erfolgt auf einer Seite über ein axiales Gleitlager 89 mittels des Seitenrollenflansches 83 an einer gebogenen Trägerplatte 84 oder am ebenen Rollenhalteblech 96.

Figur 19 zeigt die erste Ausgestaltung der seitlichen Lagerung 102 für die Befestigung der Seitenrolle 95, die nicht im Abstand in Längsrichtung von der Traverse 2, d. h. im Längsabstand, verstellbar ist. Als Einsatzort für diese erste Ausgestaltung, bei der der Längsabstand der Seitenrollen 95 relativ zu einem Teil des Gehäuses 58 des Laufwagens 3 nicht verstellbar ist, kann der erste Bereich 59 des Gehäuses 58 genutzt werden, der aufgrund seiner genauen nicht gebogenen Form als Referenzebene für die Montage des Gehäuses 58 genutzt wird. Damit wird sichergestellt, dass der Laufwagen 3 mit seinem ersten Bereich 59 des Gehäuses 58 exakt parallel zur Traverse 2 verfahren wird.

Die Figuren 20 und 21 zeigen eine erste Variante der zweite Ausgestaltung der seitlichen Lagerungen 73 der Befestigung der Seitenrolle 95, die im Längsabstand zur Traverse 2 verstellbar ist. Dabei ist ein ebenes Rollenhalteblech 96 schlüssig mit einem gegenüberliegenden Gegenhalterblech 91 über ein gebogenes Halteblech 97, verbunden. Das gebogene Halteblech 97 ist bei der Stelle 80 mit dem ersten oder zweiten Bereich 59, 60 des Gehäuses 58 des Laufwagens 3 verhakt. Bei der gegenüberliegenden Stelle 81 kann die Seitenrolle 95 variabel in Längsrichtung relativ zur Traverse 2 zugestellt werden. Die axiale Lagerung der Seitenrolle 95 erfolgt über eine Gleitlagerung der Seitenrolle 95 am Rollenhalteblech 96 und dem Gegenhalterblech 91.

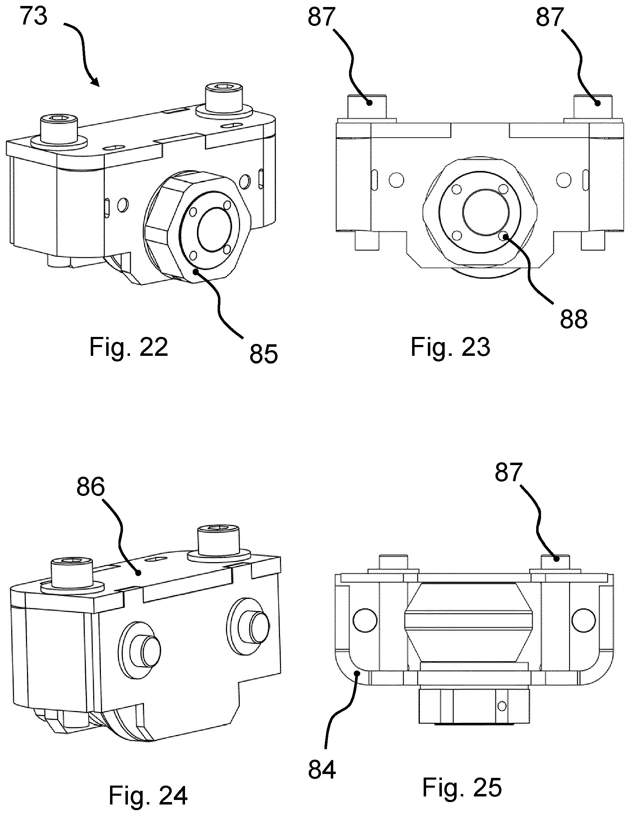

Die Figuren 22 bis 30A zeigen eine zweite Variante der zweiten Ausgestaltung der seitlichen Lagerungen 73 der Befestigung einer Seitenrollen 95, die auf andere Weise in Längsrichtung im Abstand zur Traverse 2 verstellbar ist. Bei dieser zweiten Variante ist die Seitenrolle 95 über ein gegenüberliegendes Gegenhalterelement, das als Gegenhalterblech 91 ausgebildet ist, gelagert, wobei das Gegenhalterblech 91 mittels Hohlbuchsen 92 an der gebogenen Trägerplatte 84 befestigt ist, sodass die Länge der Hohlbuchsen 92 den Abstand der Lagerung der Seitenrolle 95 zwischen der einen und der anderen Seite festlegt. Durch die Hohlbuchsen 92 ist jeweils ein Schaft einer Schraube 87 gesteckt, sodass das Gegenhalterblech 91 an der Trägerplatte 84 mittels der Schrauben 87 so befestigt ist, dass der Abstand über die Länge der Hohlbuchsen 92 festgelegt ist. Für ein Seitenrollengehäuse ist ferner eine Abschlussplatte 86 vorgesehen. Für die Befestigung des Seitenrollengehäuses ist ferner eine Mutter 85 vorgesehen.

Wie auch in den Figuren 22 bis 30A gezeigt, ist die Seitenrollenwelle 82 drehfest mit einem Seitenrollenflansch 83 verbunden, wobei die Seitenrollenwelle 82 exzentrisch mit dem Versatz Vs zur Drehachse der Seitenrolle 95 angeordnet ist. Die Seitenrollenwelle 82 ist in den Seitenrollenflansch 83 eingepresst. Der Längsabstand der Seitenrolle 95 zu der Traverse 2 wird dadurch eingestellt, dass die Winkelposition des Seitenrollenflansches 83 zu der gebogenen Trägerplatte 84 durch Bohrungen 88 mit einem Stirnlochschlüssel verändert wird. Beim Drehen des Seitenrollenflansches 83 ändert sich der Längsabstand der Seitenrolle 95 zur Traverse 2.

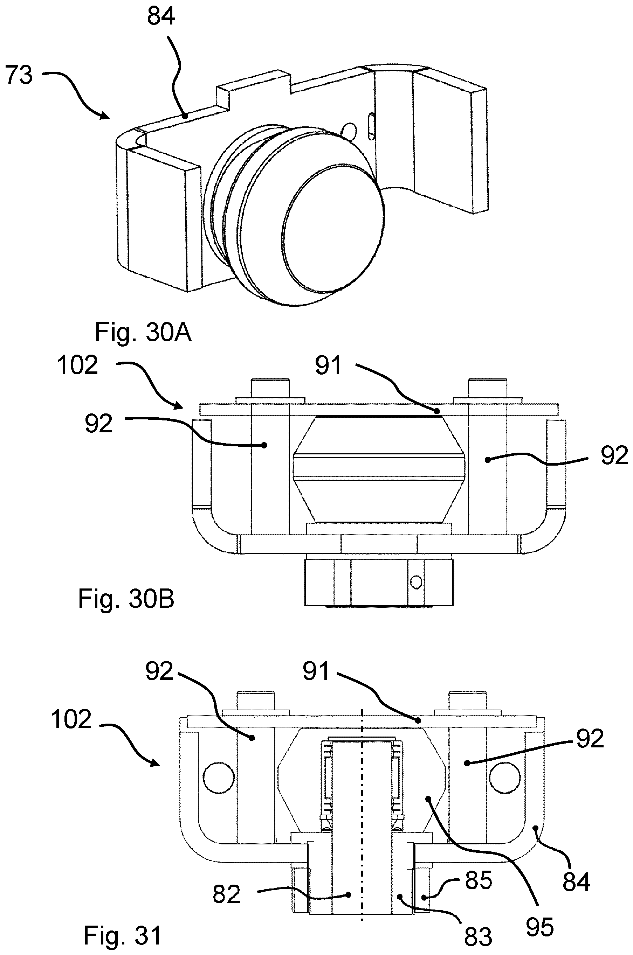

Die Figuren 30B und 31 zeigen eine andere Ausbildung der der ersten Ausgestaltung , bei der sich die Seitenrolle 95 zentrisch im Seitenrollenflansch 83 befindet. Diese seitlichen Lagerungen 102 sind am ersten Bereich 59 des Gehäuses 58 des Laufwagens 3 montiert, der aufgrund seiner exakten ungebogenen Form als Referenzeben für die Anbauteile am Gehäuse 58 genutzt wird. Die seitlichen Lagerungen im zweiten Bereich 60 des Gehäuses 58 können in ihrem Abstand zur Traverse 2 eingestellt werden. Dies führt dazu, dass der erste Bereich 59 des Gehäuses 58 exakt parallel zur Traverse 2 verfahren wird, unabhängig zu den Ungenauigkeiten, die aufgrund der Biegung des zweiten Bereiches 60 des Gehäuses 58 vorhanden sind.

Die Seitenrolle 95 ist über ein Axial-Gleitlager 89, das zwischen der Seitenrollen 95 und dem Seitenrollenflansch 83 wirkt, sowie ein Axial-Gleitlager 90, das zwischen der Seitenrollen 95 und dem Gegenhalterblech 91 wirkt, gelagert.

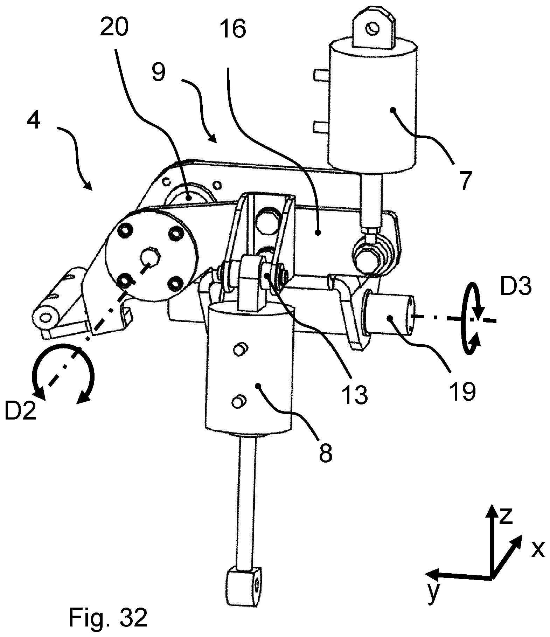

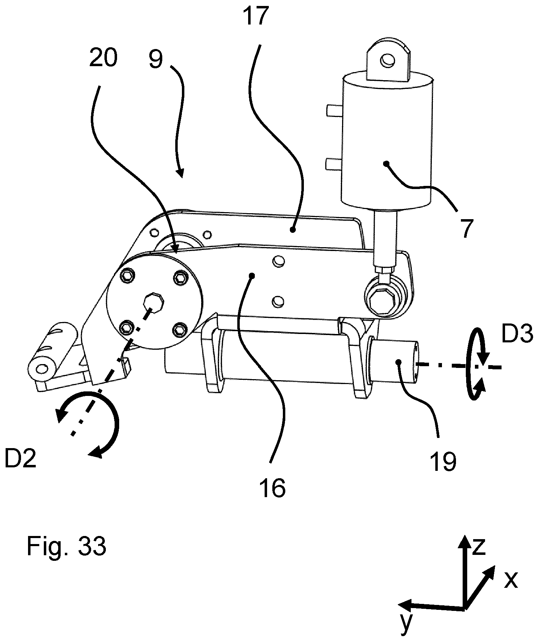

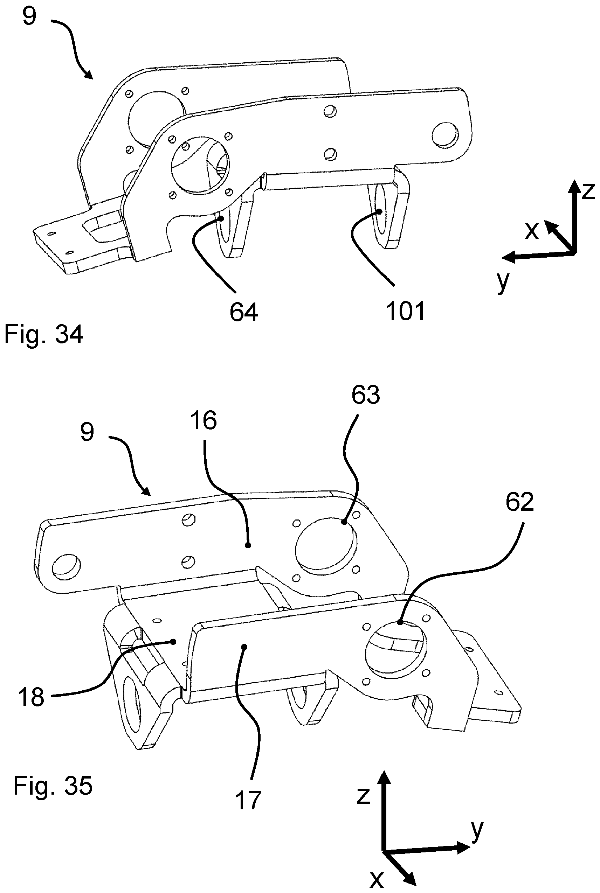

Im Folgenden werden Details der Aufhängung 4 mit Bezug zu den Figuren 32 bis 39 erläutert:
Die Aufhängung 4 beinhaltet ein Verbindungselement 9, das eine vertikal ausgerichtete Verbindungsplatte 16 aufweist, die seitlich neben dem Laufwagen 3 angeordnet ist. Der erste Stellantrieb 7 und der zweite Stellantrieb 8 sind mit dieser Verbindungsplatte 16 des Verbindungselements 9 gekoppelt. Ferner weist das Verbindungselement 9 eine vertikal ausgerichtete Gegenplatte 17 auf, die auch zumindest zum Teil seitlich neben dem Laufwagen 3 angeordnet ist, wobei die Verbindungsplatte 16 auf einer Seite des Laufwagens 3 und die Gegenplatte 17 auf der anderen Seite des Laufwagens 3 angeordnet sind. Die Verbindungsplatte 16 und die Gegenplatte 17 sind über zumindest ein Querelement 18 miteinander verbunden. Das Querelement 18 ist unterhalb des Laufwagens 3 angeordnet.

Das Verbindungselement 9 ist gebogen ausgebildet, das heißt, an die vertikal ausgerichtete Verbindungsplatte 16 schließt sich über eine Biegung unter anderem das Querelement 18 an, welches die Verbindungsplatte 16 mit der Gegenplatte 17 verbindet. Für die Befestigung einer Querwelle 19, welche die Querachse D3 bildet, und einer Längswelle 20, welche die Längsachse D2 bildet, sind in dem Verbindungselement 9 Aufnahmen ausgebildet.

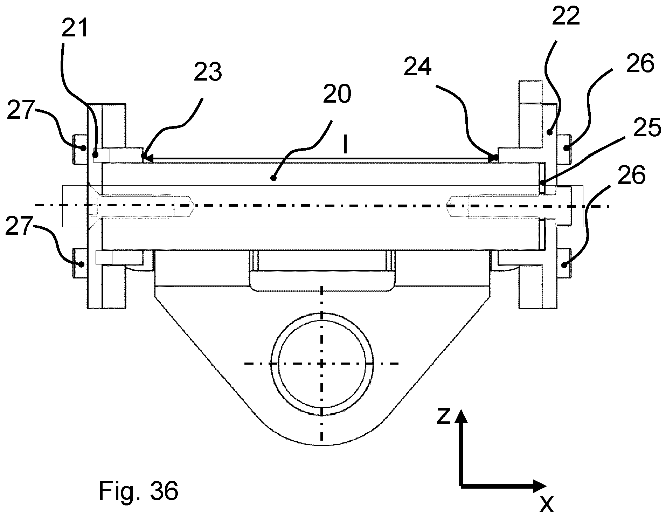

Wie in Fig. 36 gezeigt sind an der Längswelle 20 ein erster Flansch 21 und ein zweiter Flansch 22 fest montiert. Die Flansche 21 und 22 sind über Schrauben 26 und 27 mit den Stirnseiten der Längswelle 20 verschraubt. Der erste Flansch 21 weist dabei eine erste axiale Lagerfläche 23 auf. Gleichermaßen weist der zweite Flansch 22 eine zweite axiale Lagerfläche 24 auf. Die beiden axialen Lagerflächen 23 und 24 sind dabei so an der Längswelle 20 montiert, dass sie parallel zueinander ausgerichtet sind.

Die Längswelle 20 ist über den ersten Flansch 21 in einer ersten Aufnahme 62 des Verbindungselements 9 und über den zweiten Flansch 22 in einer zweiten Aufnahme 63 des Verbindungselements 9 befestigt, wobei bei der Befestigung der axiale Abstand I der ersten axialen Lagerfläche 23 von der zweiten axialen Lagerfläche 24 einstellbar ist. Im vorliegenden Ausführungsbeispiel wird bei der Befestigung der Abstand I der ersten axialen Lagerfläche 23 von der zweiten axialen Lagerfläche 24 durch eine oder mehrere Beilagscheiben 25, die zwischen der Stirnseite der Längswelle 20 und dem ersten 21 oder dem zweiten Flansch 22 angeordnet sind, eingestellt. Weiterhin können Beilagscheiben zwischen dem Flansch 21 und der ersten Aufnahme 63 des Verbindungselements 9 und dem Flansch 22 und der zweiten Aufnahme 64 des Verbindungselementes 9 enthalten sein, um Ungenauigkeiten auszugleichen.

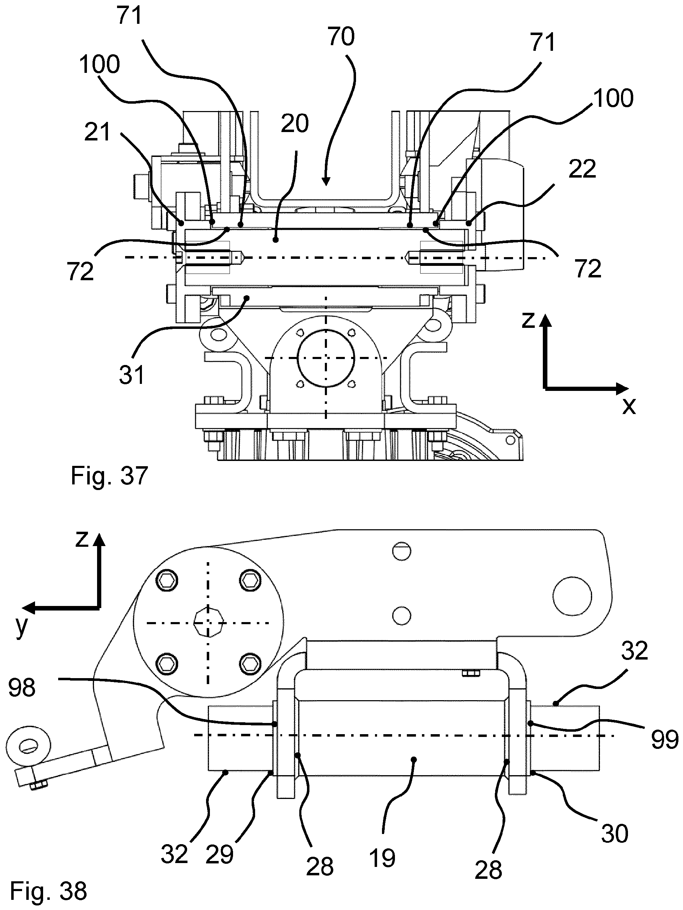

Für die Kopplung der Aufhängung 4 mit dem Laufwagen 3 weist der Laufwagen 3 einen Lagerblock 31 (siehe Figuren 10 und 37) auf, bei dem eine Aufnahmeöffnung ausgebildet ist, in welcher die Längswelle 20 angeordnet ist. Hierfür umfasst die Aufnahmeöffnung eine erste Lageranordnung 70, welche Lagerblock-Lagerflächen 71 aufweist, in denen in einer Ausprägung Gleitlager 72 enthalten sind, in denen die Längswelle 20 geführt und ausgerichtet ist, so dass von der Längswelle 20 eine Drehbewegung relativ zu dem Lagerblock 31 ausgeführt werden kann. Dabei liegen die Lagerblock-Lagerflächen 71 über die radialen Gleitlager 72 an der Längswelle 20 und über die axialen Gleitlager 100 an der ersten axialen Lagerfläche 23 und der zweiten axialen Lagerfläche 24 an. Die Längswelle 20, über welche die Waschbürste 5 mittels des ersten Stellantriebs 7 in Querrichtung geschwenkt wird, ist somit an dem Verbindungselement 9 befestigt und in dem Lagerblock 31 des Laufwagens 3 gelagert.

Die im Verbindungselement 9 enthaltenen Aufnahmen 62, 63 sind ausreichend groß, um trotz der sich durch die Biegungen des Verbindungselements 9 ergebenden Ungenauigkeiten die über die Längswelle 20 zentrierten Flansche 21 und 22 aufnehmen zu können.

Wie in Fig. 36 gezeigt sind die Flansche 21 und 22 axial auf den Außenflächen an den Stirnseiten der Längswelle 20 zentriert und besitzen einen Anschlag, über den sie jeweils von außen an dem Verbindungselement 9 fixiert sind. Dies führt dazu, dass die axialen Lagerflächen 23 und 24 zueinander ausgerichtet sind, selbst wenn das Verbindungselement 9 aufgrund der Biegungen Ungenauigkeiten aufweist, die dazu führen, dass die Montageöffnungen nicht genau parallel zueinander ausgerichtet sind. Die axialen Lagerflächen 23 und 24 der Flansche 21 und 22 geben daher einen definierten Abstand I vor, welcher für die Funktion der Lagerung wichtig ist. Dieser Abstand I kann über die Beilagscheiben 25 zwischen einem der Flansche 21, 22 und den Stirnseiten der Längswelle 20 eingestellt werden.

Wie bereits beim Gehäuse 58 des Laufwagen 3, ergibt sich auch bei dem Verbindungselement 9, dass plane Elemente, wie die Verbindungsplatte 16, zum Beispiel durch Laserschneiden sehr exakt und dabei sehr kostengünstig hergestellt werden können, die gebogenen Teile hingegen nicht sehr passgenau ausgerichtet werden können. Wenn solche gebogenen Teile nachbearbeitet werden müssen, erhöht dies die Herstellungskosten. Obwohl die beiden Aufnahmen 62 und 63 des Verbindungselements 9 nicht exakt zueinander ausgerichtet sind, da sie über gebogenen Teile miteinander verbunden sind, ist es bei der Verbindung der Längswelle 20 über die Flansche 21 und 22 möglich, die Längswelle 20 exakt zum Laufwagen 3 auszurichten, ohne das Nacharbeiten an gebogenen Elementen des Verbindungselements 9 oder gebogenen Elementen des Laufwagens 3 erforderlich wären.

Zwischen der Längswelle 20 und dem Lagerblock 31 ist bei diesem Ausführungsbeispiel ein Gleitlager gebildet. Über die Längswelle 20 und den Lagerblock 31, bei denen es sich um Fräs- und Drehteile handelt, ist die Lagerung funktional definiert, ohne dass die gebogenen Elemente des Gehäuses 58 des Laufwagens 3 bzw. des Verbindungselements 9, die etwaige Ungenauigkeiten aufweisen, nachbearbeitet werden müssen. Hierdurch kann die Lagerung der Längswelle 20 kostengünstig realisiert werden.

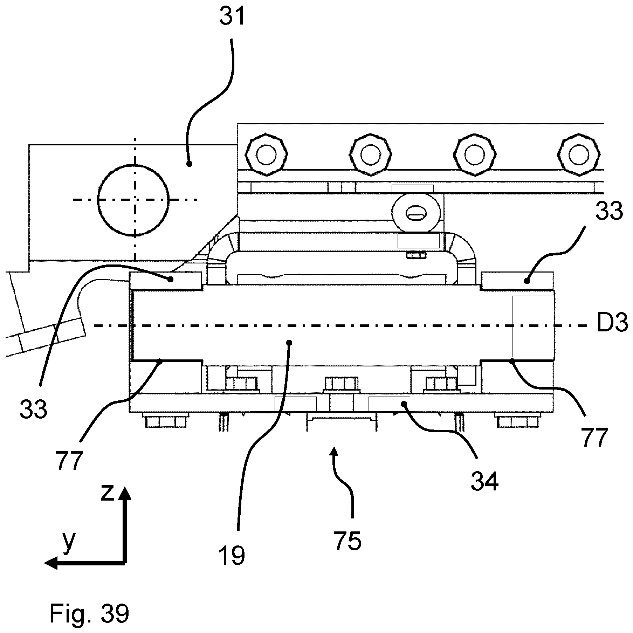

Im Folgenden wird die Kopplung der Querwelle 19 für das Längsschwenken erläutert:
Wie in Figuren 38 und 39 gezeigt ist die Querwelle 19 an einer dritten 64 und vierten Aufnahme 101 des Verbindungselements 9 befestigt. Die Querwelle 19 weist einen ersten Absatz 98 mit einer dritten axialen Lagerfläche 29 und einen zweiten Absatz 99 mit einer vierten axialen Lagerfläche 30 auf. Die Querwelle 19 ist fest an der dritten 64 und vierten Aufnahme 101 des Verbindungselements 9 befestigt. Sie ist beispielsweise über eine Schweißverbindung 28 an dem Verbindungselement 9 angeschweißt.

Zur Kopplung der Waschbürste 5 mit dem Verbindungselement 9 ist die Querwelle 19 drehbar mit dem Bürstenbefestigungselement 10, an welchem die Waschbürste 5 befestigt ist, gekoppelt. Das Bürstenbefestigungselement 10 weist eine zweite Lageranordnung 75 mit Lageraufnahmen 33 auf, die an der Querwelle 19 gelagert anliegen, so dass von der Querwelle 19 eine Drehbewegung relativ zu dem Bürstenbefestigungselement 10 ausgeführt werden kann. Die radiale Lagerflächen 32 und die axialen Lagerflächen 29 und 30 der Querwelle liegen dabei über die Axial-Radial-Gleitlager 77 an den Lagerflächen der Lageraufnahmen 33 an.

Auch in diesem Fall werden die Montageöffnungen der dritten 64 und vierten Aufnahme 101, in denen die Querwelle 19 liegt, durch ein Biegen zueinander ausgerichtet, wodurch Ungenauigkeiten bei der Ausrichtung entstehen. Die Montageöffnungen der dritten 64 und vierten Aufnahme 101 sind auch in diesem Fall groß genug, um die Querwelle 19 trotz etwaiger Biegeungenauigkeiten aufzunehmen. Die Querachse 19 wird jedoch auf der Innenseite mit den Montageöffnungen der dritten 64 und vierten Aufnahme 101 des Verbindungselements 9 stoffschlüssig verbunden. Auf die jeweiligen Außenseiten sind die radialen 32 und axialen Lagerflächen 29 und 30 gebildet, die exakt zueinander ausgerichtet sind, da sie auf der Querwelle 19 ausgebildet sind. Da es sich hierbei um ein Drehteil handelt, ist der Abstand der beiden axialen Lagerflächen 29 und 30 sehr genau festlegbar. Die Lageraufnahmen 33 für die Querwelle 19 liegen an den radialen Lagerflächen 32 mit dazwischen liegendem Gleitlager 77 an. Sie sind auf einer Befestigungsplatte 34 montiert. Da diese Befestigungsplatte 34 nicht gebogen ist, bietet sie eine plane Montageebene für die Lageraufnahmen 33. Die axiale Ausrichtung der zweiten Lageranordnung 75 sowie die Positionierung und die Beabstandung der Lageraufnahmen 33 ergeben sich dabei im Montageprozess über die Positionierung der Gleitlager 77 durch die Axialanschläge der Absätze 98 und 99 in der Querwelle 19.

Mit Bezug zu den Figuren 2, 3 und 7 wird beschrieben, wie die beiden Stellantriebe 7 und 8 zum Querschwenken und Längsschwenken der Waschbürste 5 montiert sind.

Der erste Stellantrieb 7 umfasst bei dem Ausführungsbeispiel einen Stellzylinder, mittels welchem die beiden Kopplungsstellen, welche auf gegenüberliegenden Seiten des Stellzylinders angeordnet sind, in Richtung einer Achse des Stellzylinders aufeinander zu und voneinander weg bewegt werden können. Der zweite Stellantrieb 8 umfasst einen entsprechenden Stellzylinder.

Der erste Stellantrieb 7 ist bei der Kopplungsstelle 11 mit dem Verbindungselement 9 der Aufhängung 4 gekoppelt. Auf der anderen Seite ist der erste Stellantrieb 7 bei der Kopplungsstelle 12 mit dem Laufwagen 3 gekoppelt. Wenn der erste Stellantrieb 7 die Kopplungsstellen 11 und 12 aufeinander zu oder voneinander weg bewegt, wird das Verbindungselement 9 um die Längsachse D2 geschwenkt, um ein Querschwenken der Waschbürste 5 zu bewirken. Die Kopplungsstelle 11 des ersten Stellantriebs 7 mit dem Verbindungselement 9 ist dabei mit einem seitlichen Versatz V zu einer Ebene angeordnet, die von den y-z-Richtungen aufgespannt wird und in welcher der Schwerpunkt S der Waschbürste 5 in Nullstellung liegt. Die Kopplungsstelle 11 befindet sich somit nicht über dem Schwerpunkt der Waschbürste 5, sondern sie ist in x-Richtung versetzt. Hierdurch ist es möglich, den ersten Stellantrieb 7 seitlich neben dem Laufwagen 3 anzuordnen, gleichzeitig die Waschbürste 5 jedoch vertikal unter dem Laufwagen 3 anzuordnen.

In vertikaler Richtung wird hierdurch Bauraum gewonnen. Die Rotationsachse R der Waschbürste 5 ist versetzt zur Längsachse D2 zum Querschwenken angeordnet. Dies führt dazu, dass in der Neutralstellung das Querelement 18 des Verbindungselements 9 und die Rotationsachse R der Waschbürste 5 geneigt sind, und zwar korrespondierend zu der Neigung einer Seitenfläche des zu reinigenden Fahrzeugs. Das untere Ende der Waschbürste 5 ist in diesem Fall in Querrichtung nach außen verschwenkt. Diese Schrägstellung der Rotationsachse R der Waschbürste in der Neutralstellung des Stellantriebs 7 wird durch den Versatz der Rotationsachse R der Waschbürste 5 zur Längsachse D2 bewirkt und stellt sich ein, wenn der Stellantrieb 7 keine Antriebskraft überträgt.

Die horizontal ausgerichtete Längsachse D2, welche von der Längswelle 20 gebildet wird, ist unterhalb der Traverse 2 gelagert.

Im Folgenden wird die Kopplung des zweiten Stellantriebs 8 zum Längsschwenken der Waschbürste 5 erläutert:
Der zweite Stellantrieb 8 ist bei einer Kopplungsstelle 13 mit dem Verbindungselement 9 der Aufhängung 4 gekoppelt, siehe Figuren 2 und 8. Auf der anderen Seite des Stellzylinders des zweiten Stellantriebs 8 ist der zweite Stellantrieb 8 bei einer Kopplungsstelle 14 mit dem Bürstenbefestigungselement 10 gekoppelt. Die Kopplungsstelle 13 des zweiten Stellantriebs 8 mit dem Verbindungselement 9 ist in der Nullstellung in der x-z-Ebene angeordnet, die von der Vertikalrichtung und der Längsrichtung aufgespannt wird und in welcher der Schwerpunkt S der Waschbürste 5 in Nullstellung liegt. Die Kopplungsstelle 13 des zweiten Stellantriebs 8 ist somit ohne Versatz zu der x-z-Ebene oberhalb des Schwerpunkts der Waschbürste 5 angeordnet.

Die Kopplungsstelle 13 des zweiten Stellantriebs 8 mit dem Verbindungselement 9 ist dabei unabhängig von der Position der unteren Kante 15 der Traverse 2 angeordnet. Hierdurch ist es möglich, die vertikal ausgerichtete Verbindungsplatte 16 des Verbindungselements 9 seitlich neben dem Laufwagen 3 anzuordnen und ermöglicht die Integration eines Stellantriebes 8 mit einer vergleichsweise großen Längserstreckung zwischen den Kopplungsstellen 13 und 14.

Werden die Kopplungsstellen 13 und 14 des zweiten Stellantriebs 8 aufeinander zu oder voneinander weg bewegt, wird das Verbindungselement 9 um die Querachse D3, welche von der Querwelle 19 gebildet wird, geschwenkt, wodurch die Waschbürste 5 in Längsrichtung geschwenkt wird.

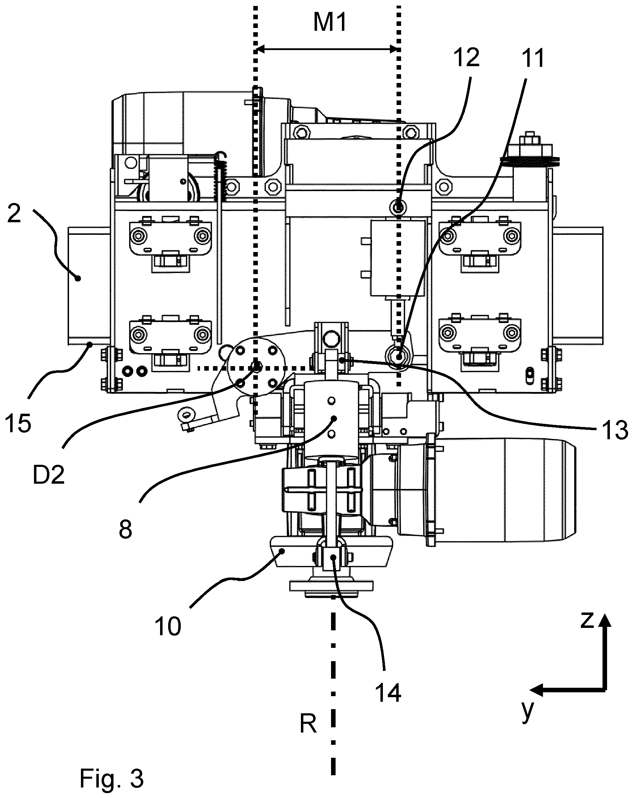

Mit Bezug zu Figur 3 und Figur 7, die eine Ansicht von oben zeigt, werden die Lagen der Kopplungsstellen zu relativ zu dem Schwerpunkt S der Waschbürste 5 in Nullstellung erläutert:
Die Kopplungsstelle 11 zwischen dem ersten Stellantrieb 7 und dem Verbindungselement 9 weist einen Versatz V in x-Richtung zum Schwerpunkt S der Waschbürste 5 in Nullstellung und zur Querachse D3 auf. Zum Querschwenken mittels des ersten Stellantriebs 7 ist zwischen der Kopplungsstelle 11 und der Längsachse D2 der Längswelle in y-Richtung ein Hebel M1 gebildet. Die Kopplungsstelle 13 zwischen dem zweiten Stellantrieb 8 und dem Verbindungselement 9 weist keinen Versatz in y-Richtung zum Schwerpunkt S der Waschbürste 5 in Nullstellung auf. Zum Längsschwenken mittels des zweiten Stellantriebs 8 ist zwischen der Kopplungsstelle 13 und dem Schwerpunkt S der Waschbürste 5 in Nullstellung in x-Richtung ein Hebel M2 gebildet. Die Ausrichtung des zweiten Stellantriebs 8 zum Schwerpunkt S der Waschbürste liegt immer in einer Ebene, die von der Rotationsachse R der Waschbürste 5 und dem zweiten Stellantrieb 8 aufgespannt wird, da die Längsschwenkachse inklusive des zugehörigen Stellantriebs 8 in der kinematischen Kette nach der Querschwenkachse angeordnet ist und daher beim Querschwenken mitbewegt wird.

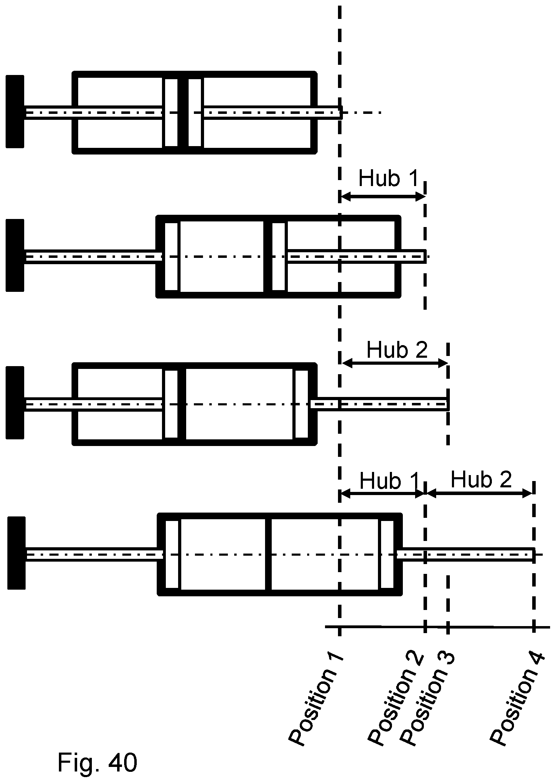

Im Folgenden werden weitere Details der Ausgestaltung der Stellantriebe 7 und 8 im Detail mit Bezug zu Figur 40 erläutert:
Die Stellantriebe 7 und 8 umfassen Stellzylinder, die pneumatisch verstellbar sind. Bei dem Stellzylinder des zweiten Stellantriebs 8 handelt es sich um einen asymmetrischen Doppelzylinder mit zumindest vier aktiven Stellungen sowie einer passiven Stellung, in welcher keine Kräfte oder Drehmomente von dem Stellzylinder ausgeübt werden. Wie in Figur 40 gezeigt, umfasst der asymmetrische Doppelzylinder zwei in Serie angeordnete Stellzylinder, wobei jeder der beiden Stellzylinder aktiv in zwei Stellungen gebracht werden kann. Dabei unterscheidet sich der Hub des einen Stellzylinders von dem Hub des anderen Stellzylinders, wodurch die vier aktiven Stellungen definiert werden. Der Quotient der beiden Hübe der beiden Stellzylinder des Doppelzylinders ist bei dem Ausführungsbeispiel 0,3.

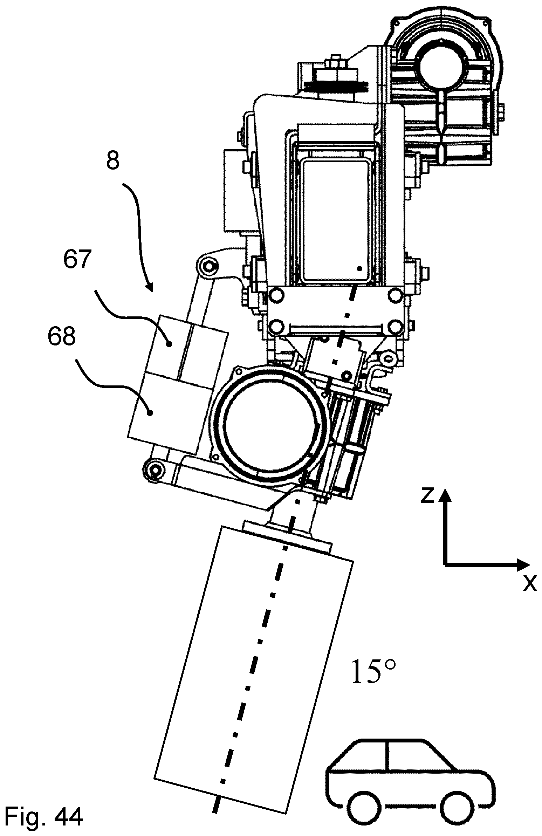

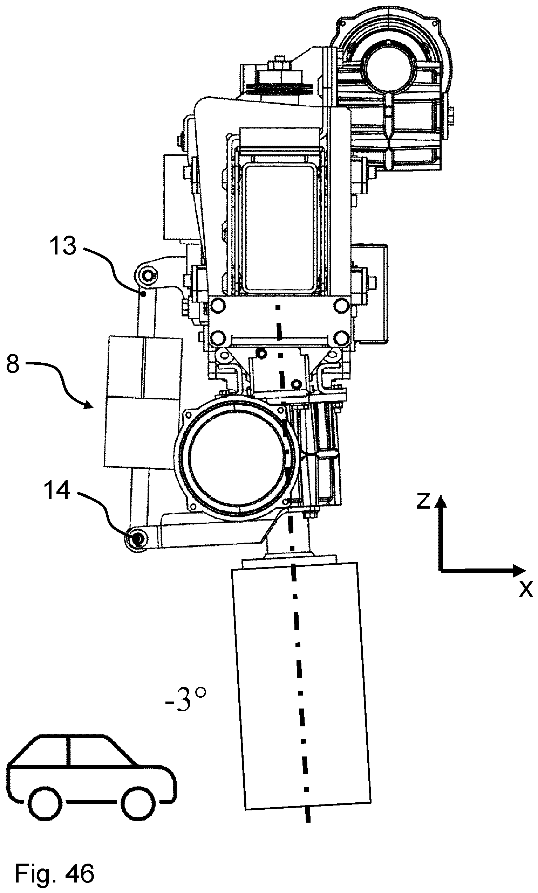

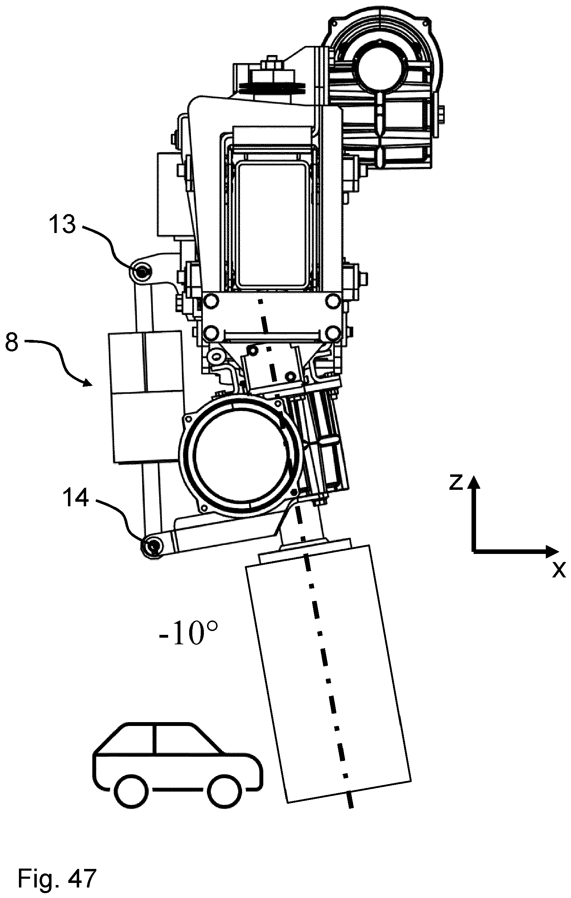

Ein solcher pneumatischer Doppelzylinder benötigt in Achsrichtung einen relativ großen Bauraum, damit die zwei Einzelzylinder seriell zusammengeschaltet werden können, siehe Figuren 44 bis 53. Die Kopplung der Stellantriebe 7 und 8 mit dem Verbindungselement 9 einerseits und dem Laufwagen 3 bzw. dem Bürstenbefestigungselement 10 andererseits ist so ausgestaltet, dass ein solcher langer Bauraum ermöglicht werden kann. Hierdurch wird es insbesondere möglich, einen großen Schwenkwinkel insbesondere für das Längsschwenken um die Querachse D3 zu ermöglichen. Auf diese Weise kann die Waschbürste 5 sowohl in Längsrichtung als auch in Querrichtung in verschiedene Positionen verfahren werden, die sich nach der individuellen Form des zu reinigenden Fahrzeugs richten. Zum Beispiel kann die Waschbürste 5 in ihrer Neigung an den Neigungswinkel des Frontbereichs, des Heckbereichs und die Seitenbereiche des Fahrzeugs angepasst werden. Außerdem ist es möglich, dass die Waschbürste 5 an die Position der Traverse 2 relativ zum Fahrzeug in Längsrichtung angepasst werden kann.

Dies ist zum Beispiel bei einer Ausgestaltung der Fahrzeugbehandlungsanlage als Waschstraße von Vorteil, da sich in diesem Fall das Fahrzeug bewegt und die Traverse 2 mitgeführt werden kann. Wenn die Waschbürste 5 das Fahrzeug durch Schrägstellung erwarten und verabschieden kann, wird eine kürzere Verfahrlänge für die Traverse 2 benötigt, sodass die Länge der Waschstraße verkürzt wird, wodurch eine Kostenersparnis erzielt wird.

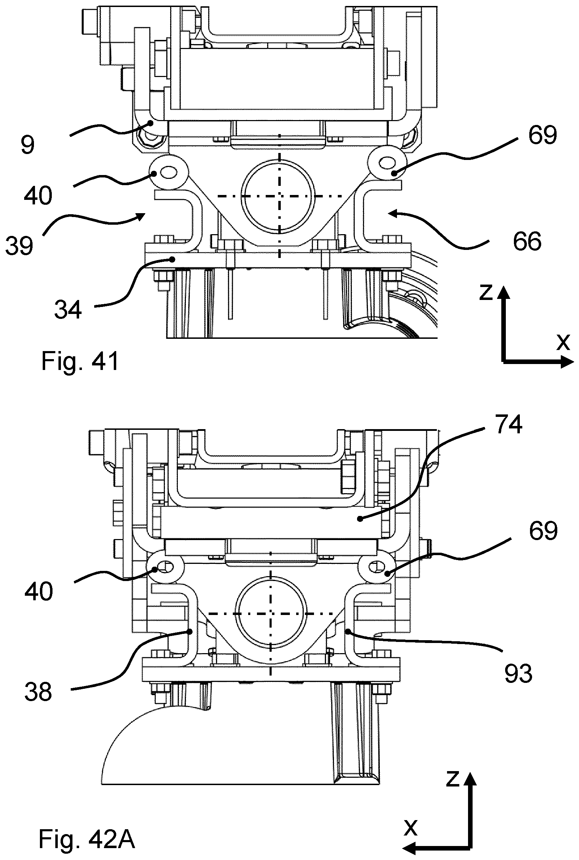

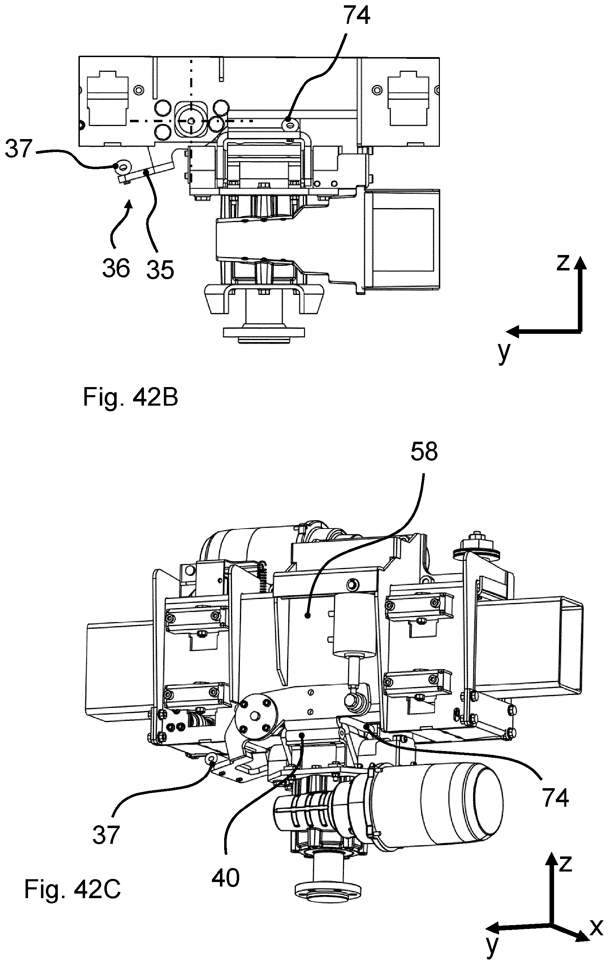

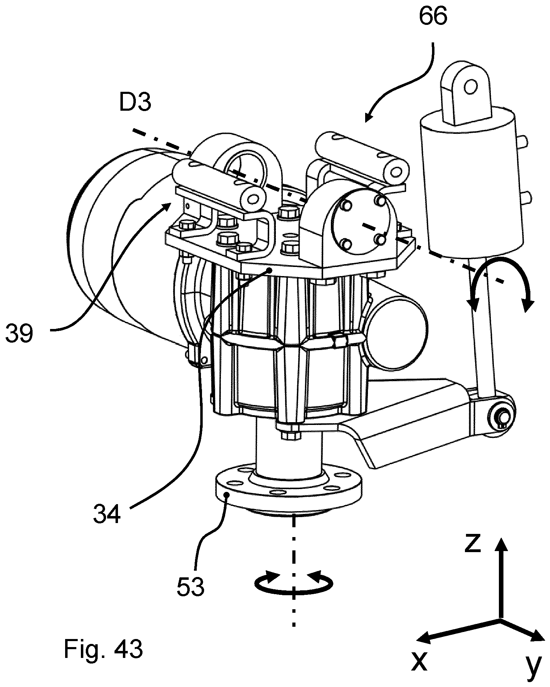

Die Schwenkbewegung der Waschbürste 5 durch die Stellantriebe 7 und 8 wird durch Anschläge begrenzt, wie es im Folgenden mit Bezug zu den Figuren 41 bis 43 beschrieben wird:
Die Aufhängung 4 weist einen ersten Anschlag 36 auf, welcher das Querschwenken des Verbindungselements 9 um die Längsachse D2 gegenüber dem Gehäuse 58 des Laufwagens 3 begrenzt. Hierfür umfasst der erste Anschlag 36 ein erstes Dämpferelement 37 und ein erstes Befestigungselement 35, bei dem es sich um einen Teil des Verbindungselementes 9 handelt. Das erste Dämpferelement 37 ist mittels dem ersten Befestigungselement 35 an der Aufhängung 4 befestigt. Ebenso ist ein viertes Dämpferelement 74 mit dem Verbindungselement 9 über das Querelement 18, bei dem es sich um einen Teil des Verbindungselementes 9 handelt, verbunden und begrenzt den Bewegungsraum des Querschwenkens in die andere Drehrichtung.

Gleichermaßen sind ein zweiter Anschlag 39 und ein dritter Anschlag 66 vorgesehen, welche das Längsschwenken der Befestigungsplatte 34 um die Querachse D3 begrenzt. Hierfür umfasst der zweite Anschlag 39 ein zweites Dämpferelement 40 und ein zweites Befestigungselement 38 zum Befestigen des zweiten Dämpferelements 40 an der Befestigungsplatte 34. Das zweite Befestigungselement 38 weist eine Sollbruchstelle auf, die bricht, wenn das von der Waschbürste 5 ausgeübte Drehmoment auf die Querwelle 19 einen Schwellwert überschreitet. Der dritte Anschlag 66 umfasst ein drittes Dämpferelement 69 und ein drittes Befestigungselement 93. Das zweite und dritte Befestigungselement sind als U-Profil ausgebildet, wobei das jeweilige Dämpferelement 40, 69 an einem Schenkel des U-Profils anliegt und die Sollbruchstelle an einem im Wesentlichen rechtwinklig dazu angeordneten Schenkels des U-Profils ausgebildet ist. Der Abstand der beiden gegenüberliegenden Schenkel des U-Profils kann die Lage des Anschlags festlegen, so dass über diese Befestigungselemente 38, 69 der maximale Schwenkwinkel der Waschbürste 5 in Längsrichtung definiert werden kann. Außerdem kann dieser maximale Schwenkwinkel auf einfache Weise durch Austauschen der Befestigungselemente 38 bzw. 69 verändert werden.

Mit Bezug zu den Figuren 44 bis 53 werden die verschiedenen Schwenkstellungen der Waschbürste 5 und die dazugehörigen Auslenkungen der Stellantriebe 7 und 8 bzw. des ersten 67 und des zweiten Stellzylinders 68 erläutert:

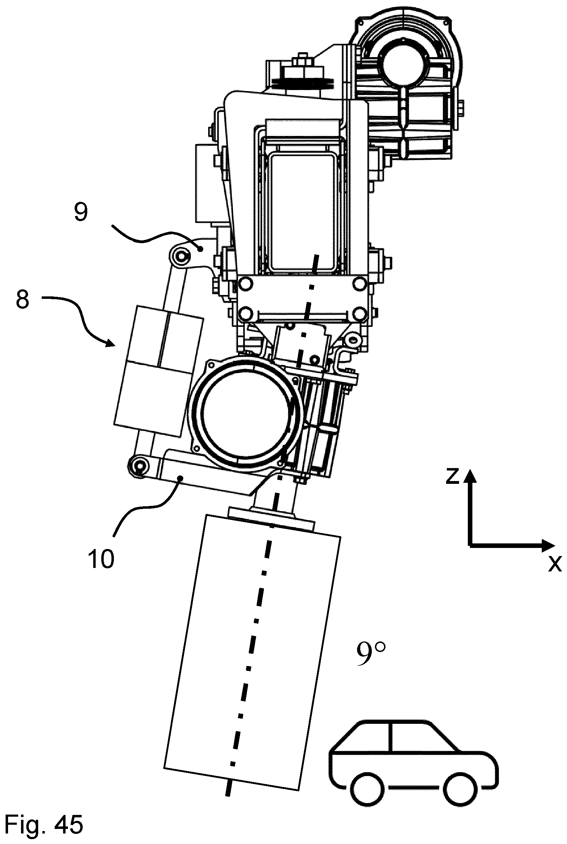

Die Figuren 44 bis 47 zeigen verschiedene Schwenkstellungen der Waschbürste 5 beim Längsschwenken um die Querachse D3. Bei der Stellung des zweiten Stellantriebs 8, bei der die Kopplungsstellen 13 und 14 des zweiten Stellantriebs 8 mit dem Verbindungselement 9 und dem Bürstenbefestigungselement 10 maximal aufeinander zu bewegt worden sind, ist die Rotationsachse R der Waschbürste 5 um 15° verschwenkt. Diese Schwenkrichtung entspricht der Neigung der Heckfläche eines Fahrzeugs, wie es in Figur 44 gezeigt ist. Werden die Kopplungsstellen 13 und 14 von dem zweiten Stellantrieb 8 auseinanderbewegt, ergeben sich nacheinander die in den Figuren 45 bis 47 gezeigten Schwenkstellungen der Waschbürste 5, nämlich eine Neigung gegen die Vertikale von 9°, von -3° und von -10°. Diese vier Stellungen können aktiv mit dem asymmetrischen Doppelzylinder des zweiten Stellantriebs 8 angefahren werden.

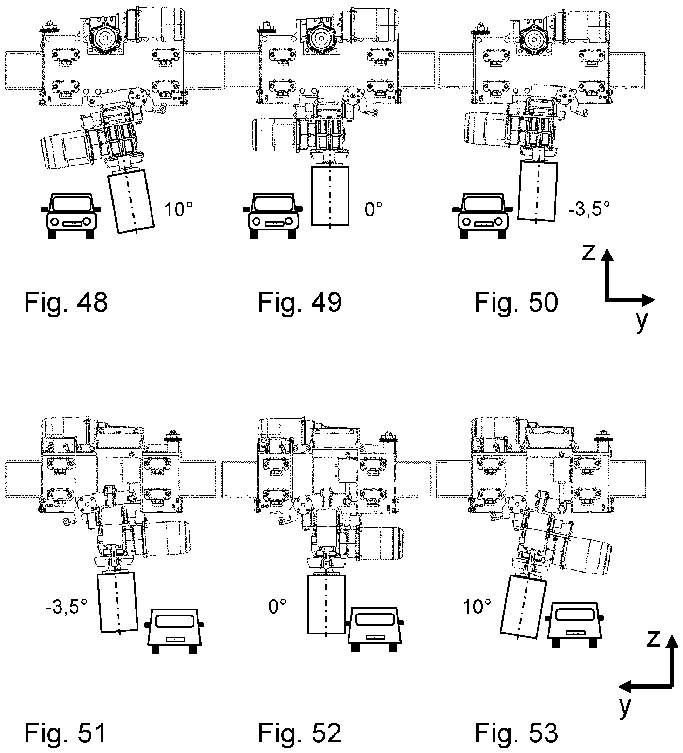

In den Figuren 48 bis 53 sind die zwei aktiv ansteuerbaren Schwenkstellungen der Waschbürste 5 beim Querschwenken um die Längsachse D2 durch den ersten Stellantrieb 7 sowie die Nullstellung von vorne und von hinten gezeigt. Die Waschbürste 5 kann um 10° aus der Vertikalen von dem Fahrzeug weg geneigt werden, so dass die Neigung einer Seitenfläche des Fahrzeugs entspricht. Ferner kann die Waschbürste 5 um -3,5° geneigt werden, so dass die Neigung entgegengesetzt zu der Neigung der Seitenfläche des Fahrzeugs ist. In der Nullstellung ist die Waschbürste 5 vertikal ausgerichtet.

In den Figuren 51 bis 53 ist erkennbar, wie die Kopplungsstellen 11 und 12 des ersten Stellantriebs 7 mit dem Verbindungselement 9 bzw. dem Laufwagen 3 bei den jeweiligen Schwenkstellungen sind.

### Bezugszeichenliste

- 1: Fahrzeugbehandlungsanlage
- 2: Traverse
- 3: Laufwagen
- 4: Aufhängung
- 5: Waschbürste/Behandlungsbürste
- 6: Motorgetriebeeinheit
- 7: erster Stellantrieb
- 8: zweiter Stellantrieb
- 9: Verbindungselement
- 10: Bürstenbefestigungselement
- 11: Kopplungsstelle des ersten Stellantriebs mit dem Verbindungselement der Aufhängung
- 12: Kopplungsstelle des ersten Stellantriebs mit dem Laufwagen
- 13: Kopplungsstelle des zweiten Stellantriebs mit dem Verbindungselement der Aufhängung
- 14: Kopplungsstelle des zweiten Stellantriebs mit dem Bürstenbefestigungselement
- 15: untere Kante der Traverse
- 16: Verbindungsplatte
- 17: Gegenplatte
- 18: Querelement
- 19: Querwelle (zweite Welle)
- 20: Längswelle (erste Welle)
- 21: erster Flansch
- 22: zweiter Flansch
- 23: erste axiale Lagerfläche
- 24: zweite axiale Lagerfläche
- 25: Beilagscheibe
- 26: Schraube
- 27: Schraube
- 28: Schweißverbindung
- 29: dritte axiale Lagerfläche
- 30: vierte axiale Lagerfläche
- 31: Lagerblock
- 32: radiale Lagerflächen der Querwelle
- 33: Lageraufnahmen
- 34: Befestigungsplatte
- 35: erstes Befestigungselement
- 36: erster Anschlag
- 37: erstes Dämpferelement
- 38: zweites Befestigungselement
- 39: zweiter Anschlag
- 40: zweites Dämpferelement
- 41: oberes Lager
- 42: Antriebsrad
- 43: Antrieb des Antriebsrads
- 44: erstes unteres Lager
- 45: erste Rolle
- 46: zweites unteres Lager
- 47: zweite Rolle
- 48: Langloch
- 49: Feder
- 50: Bügelanordnung
- 51: Schenkel
- 52: Lauffläche
- 53: Rollenwelle
- 54: Gleitlager
- 55: Reservoir
- 56: Nadellager
- 57: Hohlzylinder
- 58: Gehäuse des Laufwagens
- 59: erster Bereich des Gehäuses
- 60: zweiter Bereich des Gehäuses
- 61: Einstellschraube
- 62: erste Aufnahme
- 63: zweite Aufnahme
- 64: dritte Aufnahme
- 65: Getriebe- und Lagereinheit des Antriebsrades
- 66: dritter Anschlag
- 67: erster Stellzylinder
- 68: zweiter Stellzylinder
- 69: drittes Dämpfungselement
- 70: erste Lageranordnung
- 71: Lagerblock-Lagerflächen
- 72: radiale Gleitlager
- 73: verstellbare seitliche Lagerung
- 74: viertes Dämpfungselement
- 75: zweite Lageranordnung
- 76: Lagerflächen der zweiten Lageranordnung
- 77: Axial-Radial-Gleitlager der Querwelle
- 78: O-Ring
- 79: Kombination Nadellager Gleitlager
- 80: Seite des Laufrollengehäuses, das sich im Laufwagengehäuse verhakt
- 81: Verstellbare Seite des Laufrollengehäuses
- 82: Rollenwelle
- 83: Seitenrollenflansch
- 84: gebogene Trägerplatte
- 85: Mutter
- 86: Abschlussplatte
- 87: Schrauben
- 88: Bohrungen für Stirnlochschlüssel
- 89: Axial-Gleitlager zwischen Rolle und Flansch
- 90: Axial-Gleitlager gegen Rolle und Gegenhalterblech
- 91: Gegenhalterblech
- 92: Hohlbuchse
- 93: drittes Befestigungselement
- 94: Lauffläche
- 95: Seitenrolle
- 96: Rollenhalteblech
- 97: gebogenes Halteblech der Seitenrolle
- 98: erster Absatz
- 99: zweiter Absatz
- 100: axiales Gleitlager
- 101: vierte Aufnahme
- 102: nicht verstellbare seitliche Lagerung

## Patentansprüche

1. Fahrzeugbehandlungsanlage (1) mit
einem Laufwagen (3), der auf einer horizontalen Traverse (2) in Querrichtung bewegbar gelagert ist,
einer Aufhängung (4), die an dem Laufwagen (3) gelagert ist, und
einer um eine Rotationsachse (R) drehbaren, an der Aufhängung (4) befestigten Behandlungsbürste,
wobei die Aufhängung (4) einen ersten Stellantrieb (7) zum Querschwenken der Behandlungsbürste (5) um eine horizontale Längsachse (D2) und einen zweiten Stellantrieb (8) zum Längsschwenken der Behandlungsbürste (5) um eine horizontale Querachse (D3) aufweist,
**dadurch gekennzeichnet, dass**
der erste Stellantrieb (7) auf einer Seite mit dem Laufwagen (3) gekoppelt ist und auf der anderen Seite mit einem Verbindungselement (9) der Aufhängung (4) gekoppelt ist und
der zweite Stellantrieb (8) auf einer Seite mit dem Verbindungselement (9) gekoppelt ist und auf der anderen Seite mit einem Bürstenbefestigungselement (10), an dem die Behandlungsbürste (5) befestigt ist, gekoppelt ist,
wobei die Kopplung des ersten Stellantriebs (7) mit dem Verbindungselement (9) der Aufhängung (4) mit einem seitlichen Versatz zu einer Ebene angeordnet ist, die von der Vertikalrichtung und der Querrichtung aufgespannt wird und in welcher der Schwerpunkt der Behandlungsbürste (5) in Nullstellung liegt.

2. Fahrzeugbehandlungsanlage (1) Anspruch 1,
**dadurch gekennzeichnet, dass**
die Aufhängung (4) so ausgebildet ist, dass der Betrag des seitlichen Versatzes beim Querschwenken und beim Längsschwenken unverändert bleibt.

3. Fahrzeugbehandlungsanlage (1) Anspruch 1 oder 2,
**dadurch gekennzeichnet, dass**
die Kopplung des zweiten Stellantriebs (8) mit dem Verbindungselement (9) der Aufhängung (4) in einer Ebene (x-z) angeordnet ist, die von der Vertikalrichtung und der Längsrichtung aufgespannt wird und in welcher der Schwerpunkt der Behandlungsbürste (5) in Nullstellung liegt.

4. Fahrzeugbehandlungsanlage (1) nach einem der vorhergehenden Ansprüche,
**dadurch gekennzeichnet, dass**
der erste Stellantrieb (7) bezüglich der Längsrichtung neben dem Laufwagen (3) angeordnet ist.

5. Fahrzeugbehandlungsanlage (1) nach einem der vorhergehenden Ansprüche,
**dadurch gekennzeichnet, dass**
das Verbindungselement (9) zumindest zum Teil seitlich neben dem Laufwagen (3) angeordnet ist.

6. Fahrzeugbehandlungsanlage (1) nach einem der vorhergehenden Ansprüche,
**dadurch gekennzeichnet, dass**
die Kopplung des zweiten Stellantriebs (8) mit dem Verbindungselement (9) der Aufhängung (4) oberhalb einer unteren Kante der Traverse (2) angeordnet ist.

7. Fahrzeugbehandlungsanlage (1) nach einem der vorhergehenden Ansprüche,
**dadurch gekennzeichnet, dass**
dass der erste Stellantrieb (7) einen ersten Stellzylinder und/oder der zweite Stellantrieb (8) einen zweiten Stellzylinder aufweist.

8. Fahrzeugbehandlungsanlage (1) nach Anspruch 7,
**dadurch gekennzeichnet, dass**
der zweite Stellzylinder (8) ein asymmetrischer Doppelzylinder mit zumindest vier aktiven Stellungen ist.

9. Fahrzeugbehandlungsanlage (1) nach einem der vorhergehenden Ansprüche,
**dadurch gekennzeichnet, dass**
die Aufhängung (4) einen ersten Anschlag (36) aufweist, welcher das Querschwenken des Verbindungselements (9) um die Längsachse begrenzt, und/oder einen zweiten (39) und/oder dritten Anschlag (66) aufweist, welcher/welche das Längsschwenken des Verbindungselements (9) um die Querachse begrenzt/begrenzen.

10. Fahrzeugbehandlungsanlage (1) nach Anspruch 9,
**dadurch gekennzeichnet, dass**
der zweite (39) und/oder dritte Anschlag (66) zumindest ein Dämpferelement (40, 69) und ein zweites (38) und/oder drittes Befestigungselement (93) zum Befestigen des Dämpferelements (40, 69) an der Aufhängung (4) aufweist und das zweite (38) und/oder dritte Befestigungselement (93) eine Sollbruchstelle aufweist.

11. Fahrzeugbehandlungsanlage (1) nach einem der vorhergehenden Ansprüche,
**dadurch gekennzeichnet, dass**
der Laufwagen (3) ein Gehäuse aufweist, welches zumindest zwei Bereiche (59, 60) aufweist, wobei der erste Bereich (59) des Gehäuses (58) planar ist und der zweite Bereich (60) des Gehäuses (58) gebogen ist, und
der erste Stellantrieb (7) mit dem zweiten Bereich (60) des Gehäuses (58) gekoppelt ist.

12. Fahrzeugbehandlungsanlage (1) nach einem der vorhergehenden Ansprüche,
**dadurch gekennzeichnet, dass**
die Querachse von einer Querwelle (19) und die Längsachse von einer Längswelle (20) gebildet sind,
das Verbindungselement (9) gebogen ist,
die Querwelle (19) und die Längswelle (20) in Aufnahmen (62, 63, 64, 101) des gebogenen Verbindungselements (9) befestigt sind,
an der Längswelle (2) ein erster Flansch (21) und ein zweiter Flansch (22) fest montiert sind,
der erste Flansch (21) eine erste axiale Lagerfläche (23) aufweist und der zweite Flansch (22) eine zweite axiale Lagerfläche (24) aufweist, wobei die axialen Lagerflächen (23, 24) zueinander ausgerichtet sind,
die Längswelle (20) über den ersten Flansch (21) in einer ersten Aufnahme (62) des Verbindungselements (9) und über den zweiten Flansch (22) in einer zweiten Aufnahme (63) des Verbindungselements (9) befestigt ist, wobei bei der Befestigung der axiale Abstand (I) der ersten axialen Lagerfläche (23) von der zweiten axialen Lagerfläche (24) einstellbar ist,
der Laufwagen (3) einen Lagerblock (31) mit einer Aufnahmeöffnung aufweist, in welcher die Längswelle (20) angeordnet ist,
wobei die Aufnahmeöffnung eine erste Lageranordnung (70) umfasst, welche Lagerblock-Lagerflächen (71) aufweist, an denen über Lagerungen (72) die Längswelle (20) anliegt, sodass von der Längswelle (20) eine Drehbewegung relativ zu dem Lagerblock (31) ausführbar ist, und die Längswelle (20) mittels des ersten (21) und zweiten Flansches (22) am Lagerblock (31) axial positioniert ist.

13. Fahrzeugbehandlungsanlage (1) nach Anspruch 12,
**dadurch gekennzeichnet, dass**
die Querwelle (19) an einer dritten und vierten Aufnahme (64, 101) des Verbindungselements (9) befestigt ist,
die Querwelle (19) einen ersten Absatz (98) mit einer dritten axialen Lagerfläche (29) und einen zweiten Absatz (99) mit einer vierten axialen Lagerfläche (30) aufweist,
die Querwelle (19) drehbar mit einem Bürstenbefestigungselement (10), mit welchem die Behandlungsbürste (5) mit einer Lagerung gekoppelt ist, gekoppelt ist,
wobei das Bürstenbefestigungselement (10) eine zweite Lageranordnung (75) mit Lageraufnahmen (33) aufweist, die an radialen Lagerflächen (32) der Querwelle (19) und der dritten axialen Lagerfläche (29) und der vierten axialen Lagerfläche (30) über Lagerungen anliegt, sodass von dem Bürstenbefestigungselement (10) eine Drehbewegung relativ zur Querwelle (19) ausführbar ist.

14. Fahrzeugbehandlungsanlage (1) nach einem der vorhergehenden Ansprüche,
**dadurch gekennzeichnet, dass**
der Laufwagen (3) zumindest zwei untere horizontal beabstandete Lager und ein oberes Lager, das in horizontaler Richtung zwischen den beiden unteren Lagern angeordnet ist, aufweist, wobei das obere Lager auf der Traverse (2) aufliegt und die unteren Lager von unten an der Traverse (2) anliegen,
das erste untere Lager so an dem Laufwagen (3) montiert ist, dass es einen festen vertikalen Abstand von dem oberen Lager hat, und
das zweite untere Lager so an dem Laufwagen (3) bewegbar montiert ist, dass es mit einer Federkraft von unten gegen die Traverse (2) gedrückt wird und der vertikaler Abstand von dem oberen Lager veränderbar ist.
